# EUROPEAN PATENT APPLICATION

(11) **EP 4 576 823 A1**
(43) Date of publication of application: **25.06.2025**
(21) Application number: 23944743.6
(22) Date of filing: 13.07.2023
(51) Int. Cl.: H04R 9/06

(54) **LOUDSPEAKER**

(71) Applicant: Shenzhen Shokz Co., Ltd., Shenzhen, Guangdong 518108 (CN)
(72) Inventor: ZHOU, Wenbing, Shenzhen, Guangdong 518108 (CN); LIAO, Fengyun, Shenzhen, Guangdong 518108 (CN); QI, Xin, Shenzhen, Guangdong 518108 (CN)
(74) Representative: Wang, Bo
(86) International application number: PCT/CN2023/107256
(87) International publication number: WO 2025/010726

(57) **Abstract**

A loudspeaker (100), including a plurality of sound-generating units (110) arranged at intervals along a first direction, wherein each of the plurality of sound-generating units (110) vibrates along the first direction; a shell (120) configured to accommodate and support the plurality of sound-generating units (110), the shell (120) being provided with a plurality of sound outlet holes (121), the shell (120) and the plurality of sound-generating units (110) form a plurality of acoustic cavities (122). Each acoustic cavity (122) acoustically is coupled to at least one of the sound outlet holes (121) in the shell (120). Each of the plurality of sound-generating units (110) includes a vibration diaphragm (111) and a driving structure (112) provided on the vibration diaphragm (111).

## Description

### TECHNICAL FIELD

The present disclosure relates to the field of acoustic technology, and in particular, to a loudspeaker.

### BACKGROUND

Audio devices, including open earphones, wireless earphones, audio glasses, etc., are gradually demanding higher performance in the low-frequency range. Existing electromagnetic loudspeakers that ensure sufficient sound pressure levels for low-frequency output require a large movement, resulting in a larger device thickness.

Therefore, it is necessary to provide a loudspeaker that is relative small but can provide sufficient low-frequency output.

### SUMMARY

One of the embodiments of the present disclosure provides a loudspeaker, comprising a plurality of sound-generating units. The plurality of sound-generating units are arranged at intervals along a first direction, and each of the plurality of sound-generating units vibrates along the first direction, and a shell configured to accommodate and support the plurality of sound-generating units. The shell is provided with a plurality of sound outlet holes, the shell and the plurality of sound-generating units form a plurality of acoustic cavities, and each of the plurality of acoustic cavities is acoustically coupled to at least one of the plurality of sound outlet holes on the shell, each of the plurality of sound-generating units includes a vibration diaphragm and a driving structure provided on the vibration diaphragm.

One of the embodiments of the present disclosure further provides an acoustic output device, comprising a low-frequency unit and a high-frequency unit. The low-frequency unit includes the loudspeaker described above, and an intersection point of frequency response curves of the low-frequency unit and the high-frequency unit is in a range of 300 Hz to 1000 Hz.

### BRIEF DESCRIPTION OF THE DRAWINGS

The present disclosure will be further illustrated by way of exemplary embodiments, which will be described in detail by means of the accompanying drawings. These embodiments are not limiting, and in these embodiments, the same numbering denotes the same structure, where:
FIG. 1A is a schematic diagram illustrating an exemplary structure of a loudspeaker according to some embodiments of the present disclosure;
FIG. 1B is a schematic diagram illustrating a cross-section of the loudspeaker shown in FIG. 1A;
FIG. 1C is a schematic diagram illustrating a first view of the cross-section of the loudspeaker shown in FIG. 1B;
FIG. 2A is a schematic diagram illustrating an exemplary structure of a cross-section of a loudspeaker according to some embodiments of the present disclosure;
FIG. 2B is a schematic diagram illustrating an exemplary structure of a cross-section of a loudspeaker when a vibration diaphragm vibrates according to some embodiments of the present disclosure;
FIG. 3A is a schematic diagram illustrating an exemplary structure of a fixing ring with electrodes according to some embodiments of the present disclosure;
FIG. 3B is a schematic diagram illustrating a cross-section along A-A in FIG. 3A;
FIG. 4A is a schematic diagram illustrating an exemplary structure of a sound-generating unit according to some embodiments of the present disclosure;
FIG. 4B is a schematic diagram illustrating an exemplary structure of a loudspeaker with a sound-generating unit according to some embodiments of the present disclosure;
FIG. 5 is a schematic diagram illustrating a top view of the loudspeaker shown in FIG. 4B;
FIG. 6 is a schematic diagram illustrating an exemplary structure of a sound-generating unit according to some embodiments of the present disclosure;
FIG. 7 is a schematic diagram illustrating an exemplary structure of a sound-generating unit according to some other embodiments of the present disclosure;
FIG. 8 is a schematic diagram illustrating an exemplary structure of a sound-generating unit according to some other embodiments of the present disclosure;
FIG. 9 is a schematic diagram illustrating an exemplary structure of a sound-generating unit according to some other embodiments of the present disclosure;
FIG. 10 is a schematic diagram illustrating a cross-section of a piezoelectric driving structure according to some embodiments of the present disclosure;
FIG. 11A is a schematic diagram illustrating an exemplary structure of a piezoelectric driving structure before deformation according to embodiments of the present disclosure;
FIG. 11B is a schematic diagram illustrating an exemplary structure of a piezoelectric driving structure after deformation according to some embodiments of the present disclosure;
FIG. 12A is a schematic diagram illustrating polarization directions of piezoelectric layers of a piezoelectric driving structure according to some embodiments of the present disclosure;
FIG. 12B is a schematic diagram illustrating polarization directions of piezoelectric layers of a piezoelectric driving structure according to some embodiments of the present disclosure;
FIG. 13A is a schematic diagram illustrating an exemplary structure of a piezoelectric driving structure before deformation according to some embodiments of the present disclosure;
FIG. 13B is a schematic diagram illustrating an exemplary structure of a piezoelectric driving structure after deformation according to some embodiments of the present disclosure;
FIG. 14A is a schematic diagram illustrating polarization directions of piezoelectric layers of a piezoelectric driving structure according to some embodiments of the present disclosure;
FIG. 14B is a schematic diagram illustrating polarization directions of piezoelectric layers of a piezoelectric driving structure according to some embodiments of the present disclosure;
FIG. 14C is a schematic diagram illustrating polarization directions of piezoelectric layers of a piezoelectric driving structure according to some embodiments of the present disclosure;
FIG. 14D is a schematic diagram illustrating polarization directions of piezoelectric layers of a piezoelectric driving structure according to some embodiments of the present disclosure;
FIG. 15 is a diagram illustrating frequency response curves of a loudspeaker corresponding to different values of β according to some embodiments of the present disclosure;
FIG. 16 is a schematic diagram illustrating an exemplary quarter structure of a piezoelectric driving structure according to some embodiments of the present disclosure;
FIG. 17 is a diagram illustrating frequency response curves of a loudspeaker corresponding to different values of α according to some embodiments of the present disclosure;
FIG. 18 is a schematic diagram illustrating arranging a mass block according to some embodiments of the present disclosure;
FIG. 19A is a deformation contour plot of a vibration diaphragm without a mass block;
FIG. 19B is a deformation contour plot of a vibration diaphragm with a mass block;
FIG. 20 is a schematic diagram illustrating arranging a mass block according to some embodiments of the present disclosure;
FIG. 21A is a deformation contour plot of a vibration diaphragm without a mass block;
FIG. 21B is a deformation contour plot of a vibration diaphragm with a mass block;
FIG. 22 is a schematic diagram illustrating arranging a mass block according to some embodiments of the present disclosure;
FIG. 23A is a deformation contour plot of a vibration diaphragm without a mass block;
FIG. 23B is a deformation contour plot of a vibration diaphragm with a mass block;
FIG. 24A is a schematic diagram illustrating an exemplary structure of a stacked (10-layer) loudspeaker according to some embodiments of the present disclosure;
FIG. 24B is a diagram illustrating frequency response curves of a stacked loudspeaker and a single-layer loudspeaker according to some embodiments of the present disclosure;
FIG. 25 is a schematic diagram illustrating an exemplary structure of an acoustic output device according to some embodiments of the present disclosure;
FIG. 26A is a schematic diagram I illustrating an acoustic output device according to some other embodiments of the present disclosure;
FIG. 26B is a schematic diagram II illustrating an acoustic output device according to some embodiments of the present disclosure;
FIG. 27 is a schematic diagram illustrating an acoustic output device according to some other embodiments of the present disclosure; and
FIG. 28 is a diagram illustrating frequency response curves of an acoustic output device according to some embodiments of the present disclosure.

Markings in the figures denote: 100, loudspeaker; 110, sound-generating unit; 1101, first sound-generating unit; 1102, second sound-generating unit; 1103, third sound-generating unit; 1104, fourth sound-generating unit; 110n, n-th sound-generating unit; 111, vibration diaphragm; 112, driving structure; 1121, planar coil; 1122, magnet; 11221, first magnet; 11222, second magnet; 1123, magnetic conductor plate; 1124, magnetic conductor ring; 1125, piezoelectric driving structure; 1125a, piezoelectric covering region ; 1125b, piezoelectric non-covering region; 11251, first electrode layer; 11252, first piezoelectric layer; 11253, second electrode layer; 11254, second piezoelectric layer; 11255, third electrode layer 11256, neutral layer; 113, elastic structure; 114, lead; 120, shell; 1201, front shell; 1202, rear shell; 121, sound outlet hole; 1211, first sound outlet hole; 1212, second sound outlet hole; 121i, i-th sound outlet hole; 121(n+1), n+1-th sound outlet hole; 1212-1, 1212-2, 1213-1, sub-sound outlet holes; 122, acoustic cavity; 1221, first acoustic cavity; 1222, second acoustic cavity; 1223, third acoustic cavity; 123, fixing ring; 1231, first fixing ring; 1232, second fixing ring; 130, mass block; 140, damping/dust-proof mesh fabric; 200, acoustic output device; 201, first hole portion; 202, second hole portion; 203, third hole portion.

### DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for a person of ordinary skill in the art to apply the present disclosure to other similar scenarios in accordance with these drawings without creative labor. Unless obviously obtained from the context or the context illustrates otherwise, the same numeral in the drawings refers to the same structure or operation.

It should be understood that the terms "system", "device", "unit" and/or "module" as used herein is a way to distinguish between different components, elements, parts, sections, or assemblies at different levels. However, the words may be replaced by other expressions if other words accomplish the same purpose.

As shown in the present disclosure and in the claims, unless the context clearly suggests an exception, the words "a", "an", "one" and/or "the" do not refer specifically to the singular, but may also include the plural. In general, the terms "including" and "comprising" only suggest the inclusion of explicitly identified steps and elements that do not constitute an exclusive list, and the method or apparatus may also include other steps or elements.

Flowcharts are used in the present disclosure to illustrate operations performed by a system in accordance with embodiments of the present disclosure. It should be appreciated that the preceding or following operations are not necessarily performed in an exact sequence. Instead, steps can be processed in reverse order or simultaneously. Also, it is possible to add other operations to these processes or remove a step or steps from them.

Embodiments of the present disclosure provide a loudspeaker comprising a shell and a plurality of sound-generating units. The plurality of sound-generating units are arranged at intervals along a first direction, and each of the sound-generating units vibrates along the first direction. The shell is configured to accommodate and support the plurality of sound-generating units. A plurality of sound outlet holes are provided in the shell. The shell and the plurality of sound-generating units form a plurality of acoustic cavities, with each acoustic cavity acoustically coupled to at least one of the sound outlet holes on the shell. The sound-generating unit can generate sound waves, and the sound waves can be transmitted outwardly through the acoustic cavity in which the sound-generating unit is located and through the sound outlet hole(s) that is acoustically coupled to the acoustic cavity. In some embodiments, each of the plurality of sound-generating units includes a vibration diaphragm and a driving structure provided on the vibration diaphragm. The driving structure drives the vibration diaphragm to vibrate, and the vibration diaphragm in the vibrating state pushes the air in the acoustic cavity to generate sound waves. The embodiment of the present disclosure optimizes the loudspeaker by providing a plurality of sound-generating units arranged at intervals along a first direction, so that the loudspeaker improves the acoustic output, especially the low-frequency output, under a certain limitation on the volume. The dimension of the loudspeaker along the thickness direction can be adjusted by adjusting the number of sound-generating units along the first direction so that the loudspeaker can be flexibly adapted to the usage scenario.

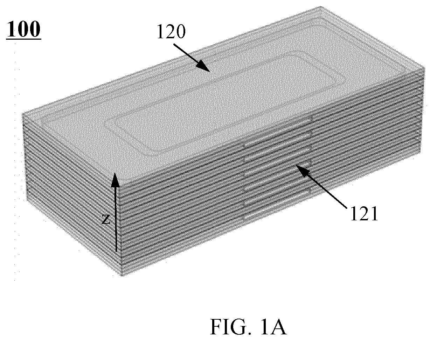

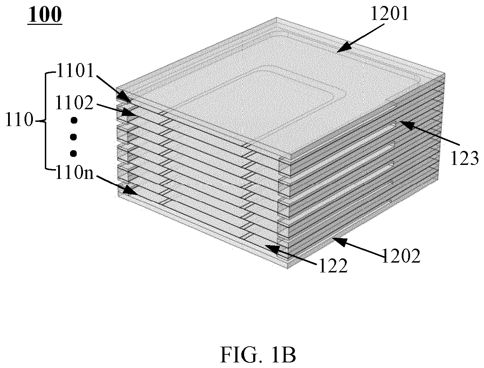

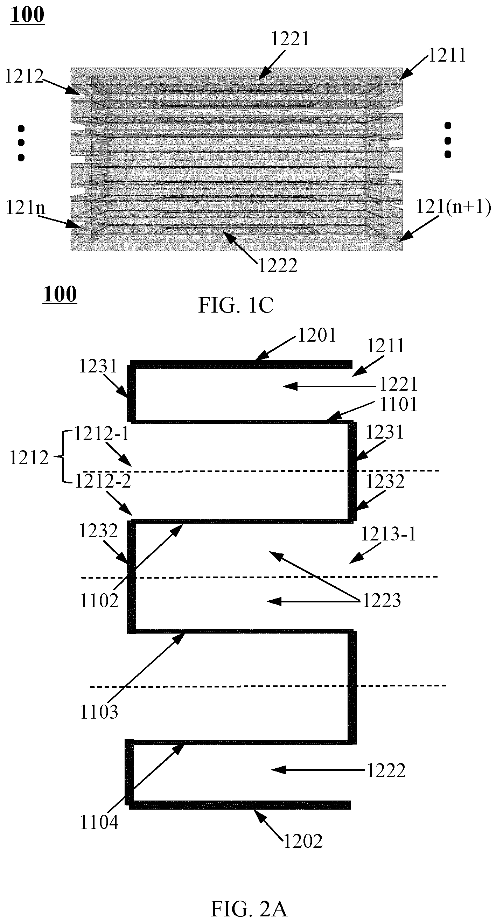

FIG. 1A is a schematic diagram illustrating an exemplary structure of a loudspeaker according to some embodiments of the present disclosure. FIG. 1B is a schematic diagram illustrating a cross-section of the loudspeaker shown in FIG. 1A. FIG. 1C is a schematic diagram illustrating a first view of the cross-section of the loudspeaker shown in FIG. 1B.

Referring to FIG. 1A to FIG. 1C, a loudspeaker 100 includes a shell 120 and a plurality of sound-generating units 110 arranged at intervals along a first direction.

The first direction described in the embodiments of the present disclosure refers to a thickness direction of the loudspeaker 100, which is the z-direction illustrated in FIG. 1A. A plane at which the sound-generating unit 110 is located is perpendicular to the thickness direction (i.e., the first direction) of the loudspeaker 100. It should be noted that the description of the direction is not limited to an absolute direction, but may also be an approximate direction. For example, the plurality of sound-generating units 110 may be arranged at intervals along the first direction or arranged at intervals approximately along the first direction. As another example, the plane at which the sound-generating unit 110 is located is perpendicular to the first direction, or is approximately perpendicular to the first direction. An approximate direction here is a direction that is at an angle with respect to an absolute direction (e.g., the first direction), and the angle may be in a range of -30° to 30°.

The shell 120 is a regular or irregular three-dimensional structure with an internal accommodation cavity. For example, the shell 120 may be a hollow frame structure, including but not limited to, regular shapes such as rectangular frames, circular frames, regular polygons, and any irregular shapes. The shell 120 is configured to accommodate the sound-generating unit 110. In some embodiments, please refer to FIG. 1A to FIG. 1C, the shell 120 may be a rectangular frame structure. For ease of description, the present disclosure is illustrated with an example that the shell 120 is a rectangular frame structure. In some embodiments, the shell 120 may be made of metal (e.g., stainless steel, copper, aluminum alloy, etc.), plastic (e.g., polyethylene (PE), polypropylene (PP), polyvinyl chloride (PVC), polystyrene (PS), and acrylonitrile butadiene styrene copolymer (ABS), etc.), composite material (e.g., a metal-based composite or non-metal-based composite), epoxy resin, phenolics, ceramics, polyimides, glass fibers (e.g., FR4-glass fibers), semiconductor materials (e.g., silicon, silicon dioxide, silicon nitride, silicon carbide, etc.), or the like, or any combination thereof.

The sound-generating unit 110 refers to a device configured to generate sound waves. The sound-generating unit 110 is located in the accommodation cavity of the shell 120. In some embodiments, the sound-generating unit 110 includes a vibration diaphragm and a driving structure.

The driving structure is configured to convert an audio signal (e.g., an electrical signal containing audio information) into a mechanical vibration. In some embodiments, the driving structure includes a piezoelectric layer. The piezoelectric layer may convert the audio signal into the mechanical vibration. Due to the inverse piezoelectric effect of the piezoelectric layer, when the electrical signal (the audio signal) is applied to the piezoelectric layer, the piezoelectric layer produces the mechanical vibration. In some embodiments, the piezoelectric layer may be made of a piezoelectric material. For example, the piezoelectric material may include piezoelectric ceramics, piezoelectric crystals, piezoelectric polymers (e.g., vinylidene fluoride), etc., or any combination thereof. In some embodiments, the driving structure may be of any shape, such as a sheet, block, column, ring structure, etc., or any combination thereof.

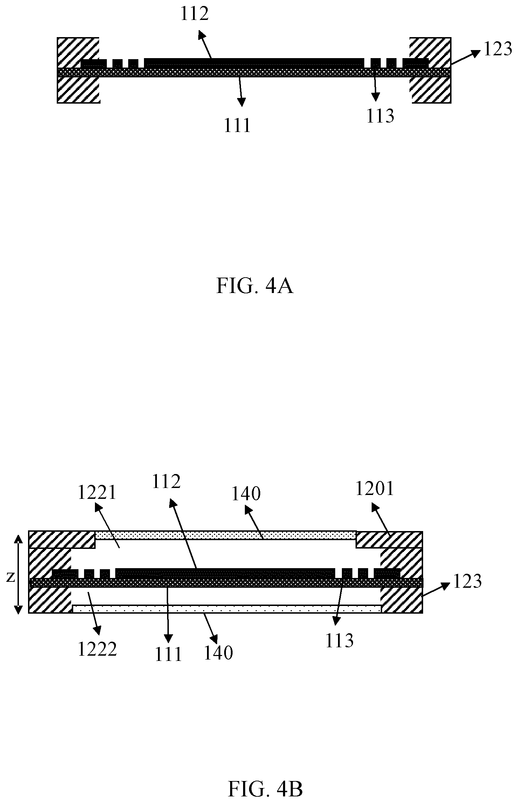

The vibration diaphragm is a component that converts the mechanical vibration from the driving structure into sound waves. In some embodiments, the vibration diaphragm may vibrate along the first direction in response to vibration of the driving structure, thereby generating sound waves (the sound signal). In some embodiments, the driving structure is provided on the vibration diaphragm. The vibration diaphragm vibrates directly in response to the deformation or displacement of the driving structure, which can push the air attached to the vibration diaphragm to vibrate at a larger scale, thereby generating sound waves. In some embodiments, the vibration diaphragm may be a thin film structure with elasticity. Specific descriptions of the sound-generating unit 110 can be found in FIG. 4A, FIG. 6 to FIG. 9 and the related descriptions thereof.

When a single sound-generating unit 110 is arranged in the accommodation cavity of the shell 120 of the loudspeaker 100, the thickness dimension of the loudspeaker 100 is small. By arranging a plurality of sound-generating units 110 at intervals along the first direction in the accommodation cavity of the shell 120, it makes the dimension of the loudspeaker 100 along the thickness direction flexibly adjustable and enables the loudspeaker 100 to maintain a compact design while achieving greater low-frequency output. In some embodiments, a count of the sound-generating unit 110 arranged at intervals along the first direction may be determined according to actual needs. For example, the count of the sound-generating units 110 arranged at intervals along the first direction is determined based on a requirement for the thickness dimension of the loudspeaker 100. As another example, the count of the sound-generating units 110 arranged at intervals along the first direction is determined based on a requirement for an output sound pressure level.

In some embodiments, the plurality of sound-generating units 110 arranged at intervals along the first direction divide the accommodation cavity of the shell 120 into a plurality of acoustic cavities 122 distributed along the first direction. A plurality of sound outlet holes are correspondingly provided on the shell 120, and each acoustic cavity 122 is acoustically coupled with at least one of the sound outlet holes on the shell 120, so that each of the acoustic cavities 122 is capable of communicating with the outside environment to transmit sound waves generated by the sound-generating unit 110 outwardly. As shown in FIG. 1B and FIG. 1C, n sound-generating units 110 are arranged at intervals along the first direction. The n sound-generating units 110 includes a first sound-generating unit 1101, a second sound-generating unit 1102, ..., a n-th sound-generating unit 110n. The accommodation cavity of the shell 120 is divided to form n+1 acoustic cavities 122 distributed along the first direction, and n+1 sound outlet holes are correspondingly provided on the shell 120. The n+1 sound outlet holes 121 includes a first sound outlet hole 1211, a second sound outlet hole 1212, ..., an n+1-th sound outlet hole 121 (n+1). Each acoustic cavity 122 is acoustically coupled to a sound outlet hole 121. In some embodiments, the sound outlet hole 121 is an aperture through the shell 120, connecting the acoustic cavity 122 to the exterior of the shell 120. In some embodiments, the sound outlet hole 121 may be a regular-shaped or irregular-shaped aperture such as a circle, a rectangle, a triangle, and so forth, and is not limited to an elongated aperture such as that shown in FIG. 1A to FIG. 1C.

In some embodiments, the shell 120 includes a front shell 1201 and a rear shell 1202. Referring to FIG. 1B, the front shell 1201 is a portion of the shell 120 that is closer to the top of the shell 120 along the first direction, and the rear shell 1202 is a portion of the shell 120 that is closer to the bottom of the shell 120 along the first direction. A first acoustic cavity 1221 is formed between the front shell 1201 and an adjacent sound-generating unit 110 of the front shell 1201, and a second acoustic cavity 1222 is formed between the rear shell 1202 and an adjacent sound-generating unit 110 of the rear shell 1202, and a third acoustic cavity 1223 is formed between two adjacent sound-generating units 110, and components enclosing the third acoustic cavity 1223 also includes a portion of the shell 120 between the two adjacent sound-generating units 110. Since the vibration diaphragm may vibrate upwardly and downwardly along the first direction in response to vibration of the driving structure, the sound-generating unit 110 may generate sound waves in the acoustic cavities 122 located above and below it. The sound waves are then transmitted outwardly through the sound outlet holes 121 acoustically coupled to the corresponding acoustic cavities 122. The first acoustic cavity 1221 is used exclusively by the sound-generating unit 110 adjacent to the front shell 1201, the second acoustic cavity 1222 is used exclusively by the sound-generating unit 110 adjacent to the rear shell 1202, and the third acoustic cavity 1223 is shared by two adjacent sound-generating units 110 (including the sound-generating unit 110 adjacent to the front shell 1201 and the sound-generating unit 110 adjacent to the rear shell 1202). Taking the sound-generating unit 110 adjacent to the front shell 1201 as an example, please refer to FIG. 1B and FIG. 1C, the first acoustic cavity 1221 is exclusively used by the first sound-generating unit 1101, the first sound-generating unit 1101 and the second sound-generating unit 1102 share the third acoustic cavity 1223 between the first sound-generating unit 1101 and the second sound-generating unit 1102, and sound waves output from the first sound-generating unit 1101 are transmitted outwardly through the first acoustic cavity 1221 and the third acoustic cavity 1223 between the first sound-generating unit 1101 and the second sound-generating unit 1102.

In some embodiments, the sound outlet hole 121 corresponding to the first acoustic cavity 1221 opens upward along the first direction. In some embodiments, the sound outlet hole 121 corresponding to the second acoustic cavity 1222 opens downward along the first direction. In some embodiments, the sound outlet holes 121 corresponding to the first acoustic cavity 1221, the second acoustic cavity 1222, and the third acoustic cavity 1223 may be arranged laterally, perpendicular to the first direction. In some embodiments, the laterally opened sound outlet holes 121 may be located on a side of the loudspeaker 100 along a long side or on a side of the loudspeaker 100 along a short side. In some embodiments, to prevent the sound waves output from the sound outlet holes 121 corresponding to adjacent acoustic cavities 122 from interacting with each other and interfering with each other, the sound outlet holes 121 corresponding to adjacent acoustic cavities 122 may be staggered. In some embodiments, the sound outlet holes 121 corresponding to the adjacent acoustic cavities 122 are located on opposite sides of the shell 120, respectively. For example, sound outlet holes 121 corresponding to adjacent acoustic cavities 122 are located on opposite sides of the shell 120 along the long side, respectively. In another embodiment, sound outlet holes 121 corresponding to adjacent acoustic cavities 122 are located on adjacent sides of the shell 120, respectively. For example, a sound outlet hole 121 corresponding to one of the adjacent acoustic cavities 122 is located on a side of the shell 120 along the long side, and a sound outlet hole 121 corresponding to another of the adjacent acoustic cavities 122 is located on a side of the shell 120 along the short side. In another embodiment, the sound outlet holes 121 corresponding to adjacent acoustic cavities 122 are located on the same side of the shell 120 and the sound outlet holes 121 corresponding to the adjacent acoustic cavities 122 are arranged closer to two opposite side surfaces of the shell 120, with the two side surfaces being oppositely arranged. For example, sound outlet holes 121 corresponding to adjacent acoustic cavities 122 are located on the same side of the shell 120 along the long side, and are located closer to opposite sides of the shell 120 along the short side.

In some embodiments, the shell 120 includes a plurality of fixing rings 123, the fixing rings 123 being used to fix the sound-generating units 110. In some embodiments, the plurality of fixing rings 123 are arranged in an overlapping manner along the first direction, the plurality of fixing rings 123 are stacked vertically to form the shell 120 between the front shell 1201 and the rear shell 1202, and the sound outlet hole 121 is opened on the fixing rings 123. The fixing ring 123 proximate to the front shell 1201 is connected to the front shell 1201, and the fixing ring 123 proximate to the rear shell 1202 is connected to the rear shell 1202.

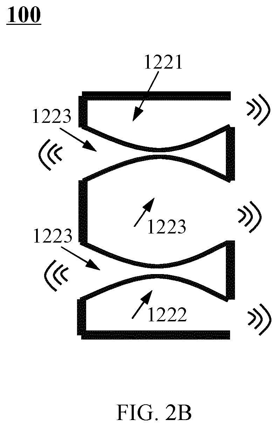

FIG. 2A is a schematic diagram illustrating an exemplary structure of a cross-section according to some embodiments of the present disclosure. FIG. 2B is a schematic diagram illustrating an exemplary cross-section of a loudspeaker when a vibration diaphragm is vibrating according to some embodiments of the present disclosure. For illustrative purposes, FIG. 2A and FIG. 2B exemplarily illustrates four sound-generating units 110.

In some embodiments, the sound-generating unit 110 is provided within the fixing ring 123 along a first direction, as shown in FIG. 2A and FIG. 2B. In some embodiments, along the first direction, the sound-generating unit 110 is located at a middle position of the fixing ring 123, i.e., the fixing ring 123 is evenly distributed on two sides of the sound-generating unit 110.

In some embodiments, the first acoustic cavity 1221 is formed between the front shell 1201 and the first sound-generating unit 1101, the second acoustic cavity 1222 is formed between the rear shell 1202 and a fourth sound-generating unit 1104, and the third acoustic cavity 1223 is formed between the first sound-generating unit 1101 and the second sound-generating unit 1102, the third acoustic cavity 1223 is formed between the second sound-generating unit 1102 and the third sound-generating unit 1103, and the third acoustic cavity 1223 is formed between the third sound-generating unit 1103.

In some embodiments, a thickness of the first acoustic cavity 1221 and/or the second acoustic cavity 1222 along the first direction is less than a thickness of the third acoustic cavity 1223 along the first direction. It is appreciated that, as shown in FIG. 2A and FIG. 2B, since the first acoustic cavity 1221 and the second acoustic cavity 1222 are formed by the sound-generating unit 110 with the front shell 1201 and the rear shell 1202, respectively, and the third acoustic cavity 1223 is formed between two adjacent sound-generating units 110, and since the fixing ring 123 is uniformly distributed on two sides of the sound-generating unit 110, the thickness of the third acoustic cavity 1223 along the first direction is greater than the thickness of the first acoustic cavity 1221 and/or the second acoustic cavity 1222 along the first direction.

In some embodiments, a plurality of sound-generating units 110 all vibrating along the first direction includes at least one sound-generating unit 110 of the plurality of sound-generating units 110 vibrating in a vertically upward direction and/or at least one sound-generating unit 110 of the plurality of sound-generating units 110 vibrating in a vertically downward direction. Further, the plurality of sound-generating units 110 all vibrating along the first direction may include two sound-generating units 110, which are adjacent and share at least one acoustic cavity 122 among a plurality of acoustic cavities 122, that vibrate in opposite directions. As shown in FIG. 2A and FIG. 2B, the first sound-generating unit 1101 vibrates in a vertically downward direction, the second sound-generating unit 1102 vibrates in a vertically upward direction, the third sound-generating unit 1103 vibrates in a vertically downward direction, and the fourth sound-generating unit 1104 vibrates in a vertically upward direction. It is illustrated that, under an excitation signal, two sound-generating units 110, which are adjacent and share at least one acoustic cavity 122 among a plurality of acoustic cavities 122, vibrate in opposite directions in the full-frequency band to enhance the output sound pressure level of the sound-generating unit 110 in the full-frequency band. In some embodiments, under an excitation signal, two sound-generating units 110, which are adjacent and share at least one acoustic cavity 122 among a plurality of acoustic cavities 122, vibrate in opposite directions in at least a portion of the low-frequency band to enhance an output sound pressure level of an acoustic output device (e.g., the acoustic output device 200) comprising the loudspeaker 100 in at least a portion of the low-frequency band, thereby satisfying a current requirements for increasing the output sound pressure level of the acoustic output device in the low-frequency band.

In some embodiments, by controlling excitation voltages of the plurality of sound-generating units 110 such that a phase difference of excitation voltages of two sound-generating units 110 of at least one acoustic cavity 122 is 180°, two sound-generating units 110, which are adjacent and share at least one acoustic cavity 122 among a plurality of acoustic cavities 122, vibrate in opposite directions in at least a portion of the low-frequency band. Based on this fact, in conjunction with the design of the sound outlet hole 121 as shown in some embodiments of the present disclosure, it is possible to increase the sound pressure level of the sound pressure level output from the loudspeaker 100 (a stacked loudspeaker) with n sound-generating units 110 by 20×log₁₀(n) times compared to the sound pressure level of the loudspeaker 100 (a single-layer loudspeaker) with only one sound-generating unit 100.

In some embodiments, at least a portion of a low-frequency band may include a portion of a frequency band that is less than 500 Hz. In some embodiments, at least a portion of the low-frequency band may include a portion of a frequency band that is less than 300 Hz. For example, a portion of the frequency band may be a range of 50Hz to 100Hz. For example, a portion of the frequency band may be a range of 100Hz to 150Hz. As another example, a portion of the frequency band may be a range of 150Hz to 280Hz, or the like.

In some embodiments, a peripheral side of each fixing ring 123 is provided with two sound outlet holes 121, and each of the two sound outlet holes 121 is coupled to acoustic cavities 122 on opposite sides of one sound-generating unit 110, respectively. The peripheral side of the fixing ring 123 may be understood as the perimeter of the fixing ring 123. For example, when the loudspeaker 100 is designed as a rectangular structure, the peripheral side of the fixing ring 123 may include a pair of long-side sides and a pair of short-side sides.

In some embodiments, the sound outlet hole 121 may be disposed oppositely on two sides (e.g., opposite long-side sides or opposite short-side sides) or adjacent to each other (e.g., adjacent long-side sides and adjacent short-side sides) of the fixing ring 123 to couple to two different acoustic cavities 122, respectively.

As shown in FIG. 2A, a dotted line indicates a connecting surface between two adjacent fixing rings 123, a peripheral side of the first fixing ring 1231 is provided with two sound outlet holes including the first sound outlet hole 1211 and a sub-sound outlet hole 1212-1, a peripheral side of the second fixing ring 1232 is provided with two sound outlet holes including a sub-sound outlet hole 1212-2 and a sub-sound outlet hole 1213-1. The sub-sound outlet hole 1212-1 is in communication with the sub-sound outlet hole 1212-2, which may constitute a complete second sound outlet hole 1212 coupled to the acoustic cavity 122. In some embodiments, the plurality of fixing rings 123 may also be integrally molded, at which point the shell 120 may be considered to include only one fixing ring 123, and the plurality of sound-generating units 110 are all provided within one fixing ring 123.

In some embodiments, along the first direction, a dimension of the sound outlet hole 121 corresponding to the first acoustic cavity 1221 and/or the second acoustic cavity 1222 are smaller than a dimension of the sound outlet hole 121 corresponding to the third acoustic cavity 1223. The dimension of the sound outlet hole 121 may include, but not limited to, a height of the sound outlet hole 121 along the first direction, etc.

In some embodiments of the present disclosure, based on the fact that two sound-generating units 110, which are adjacent and share at least one acoustic cavity 122 among a plurality of acoustic cavities 122, among a plurality of sound-generating units 110 vibrate in opposite directions in at least some of the low-frequency band, in conjunction with the design of the sound outlet hole 121 as shown in some embodiments of the present disclosure, the sound pressure level of the output of the loudspeaker 100 (a stacked-layer loudspeaker) with n sound-generating units 110 is improved compared to the sound pressure level of the output of the loudspeaker 100 (a single-layer loudspeaker) with only one sound-generating unit 110, and thus, by taking advantage of the small thickness of the sound-generating unit 110 with the single layer, the loudspeaker 100 can achieve a small thickness dimension and a large low-frequency output sound pressure level.

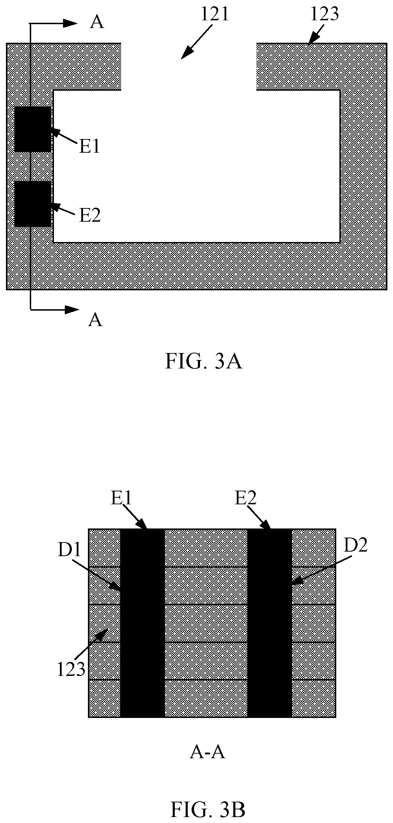

FIG. 3A is a schematic diagram illustrating an exemplary structure of a fixing ring and an electrode according to some embodiments of the present disclosure. FIG. 3B is a schematic diagram illustrating a cross-section along A-A in FIG. 3A.

In some embodiments, the shell 120 includes the front shell 1201 and the rear shell 1202, with at least two electrodes provided on each of the fixing rings 123, the at least two electrodes on each of the fixing rings 123 being connected to the front shell 1201 or the rear shell 1202, respectively, through a corresponding conduction electrode.

In some embodiments, a count of the electrode on each of the fixing rings 123 includes, but is not limited to, two. For example, based on practical needs, the count of the electrode on each of the fixing rings 123 may also be three. As shown in FIG. 3A to FIG. 3B, the fixing ring 123 may include two electrodes including an electrode E1 and an electrode E2.

In some embodiments, based on at least two electrodes (e.g., the electrode E1 and the electrode E2) on each fixing ring 123, an excitation signal (e.g., an excitation voltage) may be provided to the sound-generating unit 110 fixed to the fixing ring 123.

The conduction electrode refers to an electrode structure that is connected to a corresponding electrode on each fixing ring 123. As shown in FIG. 3B, a first conduction electrode D1 may connect the electrode E1 on each of the fixing rings 123 to the front shell 1201 or the rear shell 1202, and a second conduction electrode D2 may connect the electrode E2 on each of the fixing rings 123 to the front shell 1201 or the rear shell 1202.

In some embodiments, the fixing ring 123 serves as a part of the shell 120, and the material of the fixing ring 123 may be the same as the material of the shell 120. In some embodiments, the material of the fixing ring 123 may include one or more of FR4, FPC, and plastic. The fixing ring 123 is provided with at least two conduction holes extending along the first direction, and at least two electrodes are provided in a corresponding conduction hole, and electrodes corresponding to any two adjacent fixing rings 123 may conduct to each other to form a conduction electrode. Conducting to each other mutual conduction refers to that electrodes are electrically connected to each other.

For example, when the fixing ring 123 is made of FR4 or FPC, conduction between two end surfaces of the fixing ring 123 can be achieved directly through a conduction hole. Additionally, by using methods such as coating with conductive silver paste, conductive adhesive, or surface-mount components, at least two electrodes on each fixing ring 123 may be connected to form corresponding conduction electrodes. As another example, when the fixing ring 123 is made of a resin polymer material such as plastic, metal electrodes can be provided in the conduction holes to realize that electrodes corresponding to any two adjacent fixing rings 123 conduct to each other to form a conduction electrode.

FIG. 4A is a schematic diagram illustrating an exemplary structure of a sound-generating unit according to some embodiments of the present disclosure. The sound-generating unit 110 shown in FIG. 4A may be the sound-generating unit 110 included in the loudspeaker 100 in any embodiment of the present disclosure.

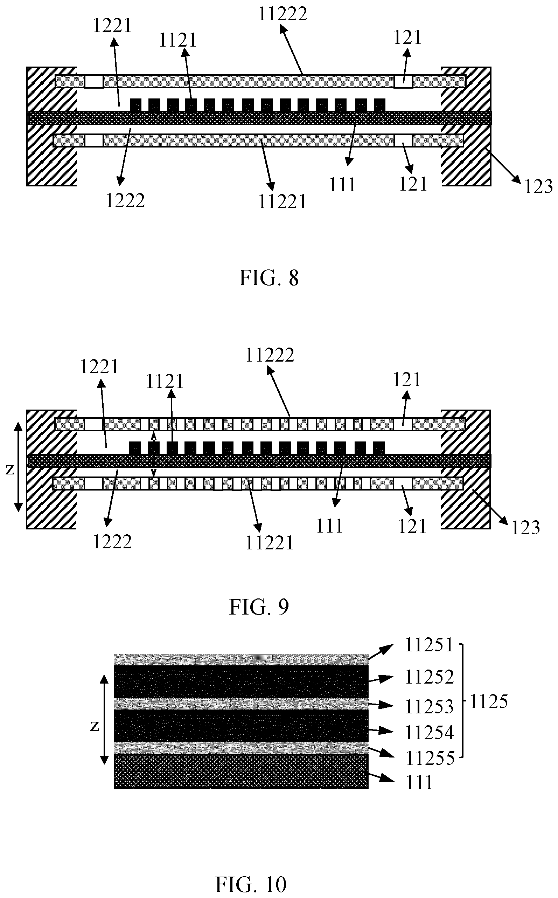

As shown in FIG. 4A, the sound-generating unit 110 includes the vibration diaphragm 111 and the driving structure 112, and the driving structure 112 is provided on the vibration diaphragm 111. The driving structure 112 includes a piezoelectric driving structure (e.g., a piezoelectric driving structure 1125 shown in FIG. 10), and due to the inverse piezoelectric effect of piezoelectricity, the piezoelectric driving structure generates a mechanical vibration when an electrical signal (audio signal) is applied to the piezoelectric driving structure. A peripheral side of the vibration diaphragm 111 is connected to an inner wall of the fixing ring 123 disposed within the acoustic cavity 122, and covers an inner region of the fixing ring 123 to divide the inner region of the fixing ring 123 into two adjacent acoustic cavities 122, located on opposite sides of the vibration diaphragm 111, i.e., a front cavity and a rear cavity. The vibration diaphragm 111 receives the vibration of the piezoelectric driving structure and generates a vibration, at which time the vibration diaphragm 111 may push the air inside the front cavity and the rear cavity, respectively, to generate sound waves. Due to the non-redundant structural design between the vibration diaphragm 111 and the driving structure 112, the vibration diaphragm 111 generates the vibration directly in response to the driving structure 112. Compared to arranging an additional vibration transmission unit between the driving structure 112 and the vibration diaphragm 111, the loudspeaker 100 provided by the present disclosure can utilize a larger proportion of the vibration driving force for generating a sound signal, so that an output sound pressure level can be improved, and at the same time, the overall thickness of the loudspeaker 100 can be significantly reduced.

In some embodiments, the peripheral side of the vibration diaphragm 111 is embedded with the inner wall of the fixing ring 123 to realize the connection between the vibration diaphragm 111 and the fixing ring 123. For example, the inner wall of the fixing ring 123 is provided with a recess along its circumferential direction, and the peripheral side of the vibration diaphragm 111 is embedded in the recess, realizing fixation with the fixing ring 123.

In some embodiments, the driving structure 112 may be a plate-like body. In some embodiments, the driving structure 112 may be a plate-like body in a regular or irregular shape such as a circle, oval, square, pentagon, hexagon, octagon, or other polygon. In some embodiments, the driving structure 112 may also be a sheet-like body or a rod-like body. For ease of description, the present disclosure is illustrated with the driving structure 112 being a square plate-like body. In some embodiments, as shown in FIG. 4A, the driving structure 112 is located on the side of the vibration diaphragm 111 facing the front cavity, with the vibration diaphragm 111 on the front cavity side connected to the driving structure 112 on the side close to the rear cavity. In other embodiments, the driving structure 112 is located on the side of the vibration diaphragm 111 facing the rear cavity, with the vibration diaphragm 111 on the rear cavity side connected to the driving structure 112 on the side close to the front cavity. In other embodiments, the sound-generating unit 110 includes two vibration diaphragms 111, the two vibration diaphragms 111 being disposed on two sides of the driving structure 112 along the first direction, respectively. One of the vibration diaphragms 111 is disposed in the front cavity, connected to a side of the driving structure 112 proximate to the front cavity; and another vibration diaphragm 111 is disposed in the rear cavity, connected to a side of the driving structure 112 proximate to the rear cavity. In some embodiments, in order to make the driving of the vibration diaphragm 111 by the driving structure 112 more uniform to enable the vibration diaphragm 111 to push the air with a larger vibration amplitude, the driving structure 112 is located in the middle of the vibration diaphragm 111. In some embodiments, while the driving structure 112 is connected to the vibration diaphragm 111, the driving structure 112 is also connected to the fixing ring 123 to avoid the mass of the driving structure 112 affecting a vibration state of the vibration diaphragm 111. In some embodiments, in order to avoid the connection of the driving structure 112 with the fixing ring 123 restricts the vibration of the vibration diaphragm 111 and prevents the driving structure 112 from driving the vibration of the vibration diaphragm 111, the driving structure 112 is connected to the fixing ring 123 through an elastic structure 113. Specifically, a first end of the elastic structure 113 is connected to a peripheral side of the driving structure 112, and a second end of the elastic structure 113 is connected to the inner wall of the fixing ring 123. In some embodiments, the second end of the elastic structure 113 is embedded with the inner wall of the fixing ring 123, realizing the connection between the elastic structure 113 and the fixing ring 123.

In some embodiments, the loudspeaker 100 may include a sound-generating unit 110. FIG. 4B is a schematic diagram illustrating an exemplary structure of a loudspeaker with a sound-generating unit according to some embodiments of the present disclosure. As shown in FIG. 4B, the loudspeaker 100 may include the shell 120 and the sound-generating unit 110. The sound-generating unit 110 is disposed in an accommodation cavity of the shell 120 perpendicular to a first direction. The shell 120 includes the fixing ring 123, the fixing ring 123 being a cylindrical structure extending along the first direction for supporting and fixing the sound-generating unit 110. Specific instructions regarding the sound-generating unit 110 and the connection of the sound-generating unit 110 to the fixing ring 123 can be found in FIG. 4A and its related description.

In some embodiments, the shell 120 further includes the front shell 1201, the front shell 1201 being connected to an upper end surface of the fixing ring 123 along the first direction. In some embodiments, the front shell 1201 is formed as a plate-like body with an aperture. The aperture is the sound outlet hole 121. In some embodiments, the shell 120 further includes a rear shell (not shown in the figures) that is connected to a lower end surface of the fixing ring 123 along the first direction. In some embodiments, the rear shell 1202 is formed as a plate-like body with an aperture. The aperture is another sound outlet hole 121. The sound-generating unit 110 includes the vibration diaphragm 111 and the driving structure 112, the vibration diaphragm 111 dividing the accommodation cavity into a front cavity (i.e., the first acoustic cavity 1221) and a rear cavity (i.e., the second acoustic cavity 1222) disposed on opposite sides of the vibration diaphragm 111. The vibration diaphragm 111 vibrates in response to deformation or displacement of the driving structure 112, and the vibration of the vibration diaphragm 111 pushes the air in the front cavity or the rear cavity to generate fluctuations, i.e., sound waves (sound signals), and the sound waves may be transmitted outwardly through the sound outlet holes 121 provided in the front shell 1201 or the rear shell 1202.

The vibration diaphragm 111 located on the side of the front cavity is connected to a side of the driving structure 112 proximate to the rear cavity. In this configuration, the vibration diaphragm 111 can drive the air in the rear cavity to generate sound waves, which are then transmitted outwardly through the sound outlet hole 121 on the rear shell 1202 In other embodiments, the vibration diaphragm 111 located on the side of the rear cavity is connected to a side of the driving structure 112 proximate to the front cavity. In this configuration, the vibration diaphragm 111 may push the air inside the front cavity to generate sound waves, which are then transmitted outwardly through the sound outlet hole 121 provided on the front shell 1201.

In some embodiments, the sound outlet hole 121 on the front shell 1201 or the rear shell 1202 is sealed for dustproof. In some embodiments, the sound outlet hole 121 may be sealed for dustproof with a damping/dust-proof mesh 140. In some embodiments, a single sound-generating unit 110 sealed for dustproof can serve as a loudspeaker, as shown in FIG. 4B. In some embodiments, as shown in FIG. 1A, in the loudspeaker 100 including a plurality of sound-generating units 110 arranged at intervals along the first direction, a sound outlet hole 121 corresponding to each of a plurality of acoustic cavities 122 is provided with the damping/dustproof mesh 140 to realize dustproof. In some embodiments, for the loudspeaker 100 shown in FIG. 1A, adjacent sound-generating units 110 may not be sealed for dustproof, allowing a front cavity and a rear cavity between the two adjacent sound-generating units 110 to remain undivided, thus forming the acoustic cavity 122. In some embodiments, for the loudspeaker 100 as shown in FIG. 1A, adjacent sound-generating units 110 may also be sealed for dustproof (e.g., by arranging the damping/dust-proof mesh 140 between the two adjacent sound-generating units 110, as not shown in the figure), thereby adjusting the output sound pressure level and the Q factor of the output frequency response of the loudspeaker 100.

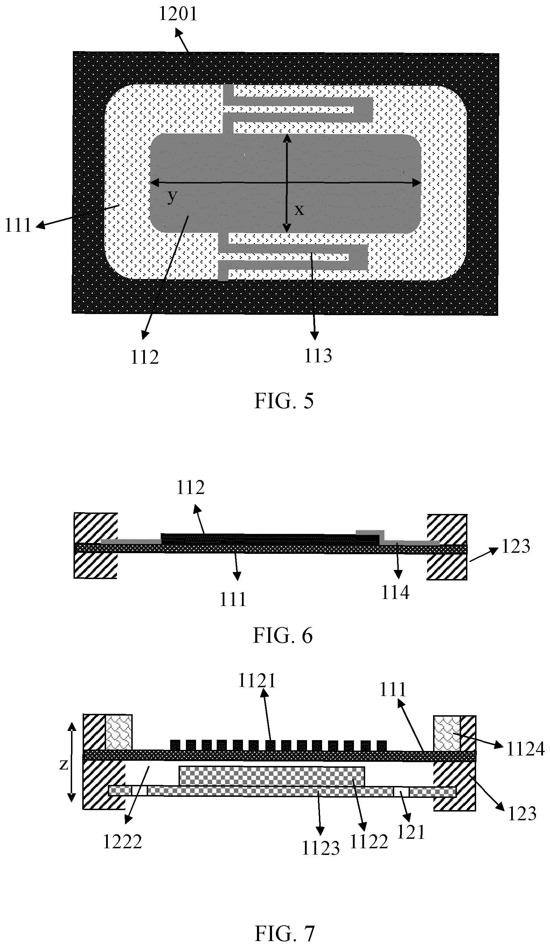

FIG. 5 is a schematic diagram illustrating a top view of a loudspeaker shown in FIG. 4B. As shown in FIG. 5, opposite sides of the driving structure 112 are connected to the fixing ring 123 through the elastic structure 113, the elastic structure 113 on both sides being symmetrical with respect to a long axis (an x-axis shown in FIG. 5) of the driving structure 112. The elastic structure 113 symmetrically disposed prevents the sound-generating unit 110 from having a vibrational mode of overturning. In some embodiments, the elastic structure 113 on both sides are symmetrical with respect to a short axis (a y-axis shown in FIG. 5) of the driving structure 112. The long axis is a centerline of the driving structure 112 along a long-axis direction, and the short axis is a centerline of the driving structure 112 along a short-axis direction.

In some embodiments, the elastic structure 113 is in a bent shape, which can increase the effective length of the elastic structure 113 in an effective space, reduce the stiffness of the elastic structure 113, and thereby reduce the influence on the overall stiffness of the vibration diaphragm 111, thereby increasing the vibration amplitude of the vibration diaphragm 111 and improving the acoustic output of the loudspeaker 100.

FIG. 6 is a schematic diagram illustrating an exemplary structure of the sound-generating unit 110 according to some embodiments of the present disclosure. The sound-generating unit 110 shown in FIG. 6 is similar to the sound-generating unit 110 shown in FIG. 4A, with the main difference that the vibration diaphragm 111 in FIG. 6 is provided with a lead 114 (i.e., an electrode), and the sound-generating unit 110 in FIG. 6 does not include the elastic structure 113, and opposite sides of the driving structure 112 in FIG. 6 are connected to the vibration diaphragm 111 through the lead 114. In some embodiments, the lead 114 is prepared directly on the vibration diaphragm 111.

The driving structure 112 in this embodiment is not connected to the fixing ring 123, which can avoid the connection between the driving structure 112 and the fixing ring 123 increases the rigidity of the vibration diaphragm 111, and thus avoids reducing the vibration amplitude of the vibration diaphragm 111.

The sound-generating unit 110 whose driving structure 112 is an electromagnetic type is described hereinafter in connection with FIG. 7 to FIG. 9. The sound-generating unit 110 may be the sound-generating unit 110 included in the loudspeaker 100 in any of the embodiments of the present disclosure.

FIG. 7 is a schematic diagram illustrating an exemplary structure of a sound-generating unit according to some other embodiments of the present disclosure.

As shown in FIG. 7, the sound-generating unit 110 includes the vibration diaphragm 111 and the driving structure 112. A peripheral side of the vibration diaphragm 111 is connected to an inner wall of the fixing ring 123, as described in FIG. 4A and related descriptions. The driving structure 112 includes a planar coil 1121 and a magnetic circuit assembly, the planar coil 1121 being provided on the vibration diaphragm 111, and the magnetic circuit assembly includes a magnet 1122, a magnetic conductor plate 1123, and a magnetic conductor ring 1124. The magnetic conductor ring 1124 is disposed around the planar coil 1121 on a plane perpendicular to a first direction, and the magnet 1122 is disposed on a side of the vibration diaphragm 111 that is back from the planar coil 1121, and the magnet 1122 being provided arranged at intervals from the vibration diaphragm 111 along the first direction, and the magnetic conductor plate 1123 being supported and connected to a lower surface of the magnet 1122 along the first direction. When an audio signal is applied to the planar coil 1121, the planar coil 1121 generates electromagnetic waves that cut through an electromagnetic field of the magnetic circuit assembly, thereby generating a driving force that drives the vibration diaphragm 111 to vibrate.

In some embodiments, an outer wall of the magnetic conductor ring 1124 extending along the first direction is connected and fixed to an inner wall of the fixing ring 123. In some embodiments, a peripheral side of the magnetic conductor plate 1123 is connected and fixed to the inner wall of the fixing ring 123. The term "connection" as used in the present disclosure can be understood as the connection between different parts of the same structure, or the fixed connection of separate parts or structures after they are individually fabricated. This can be achieved through methods such as welding, riveting, snap-fit, bolted connections, adhesive bonding, or other similar means. Alternatively, during the fabrication process, the first part or structure may be deposited onto the second part or structure through physical deposition (e.g., physical vapor deposition) or chemical deposition (e.g., chemical vapor deposition). The vibration diaphragm 111 separates a cavity inside the fixing ring 123, the vibration diaphragm 111 forms a front cavity (i.e., the first acoustic cavity 1221) along the top of the first direction, and the vibration diaphragm 111 forms a rear cavity (i.e., the second acoustic cavity 1222) between the magnetic conductor plate 1123, and the vibration diaphragm 111 pushes the air in the front cavity and the rear cavity to fluctuate to generate sound waves. In some embodiments, the magnetic conductor plate 1123 is provided with the sound outlet hole 121 for transmitting sound waves generated in the rear cavity outward. In some embodiments, the driving structure 112 may not include the magnetic conductor plate 1123, and a peripheral side of the magnet 1122 is provided with a magnetic conductor material to form a magnetic conductor ring. The magnet 1122 is connected and fixed to the inner wall of the fixing ring 123 through the magnetic conductor ring, which can reduce the thickness dimension of the sound-generating unit 110, thereby reducing the thickness dimension of the loudspeaker 100.

In some embodiments, in order to make the magnet 1122 and the planar coil 1121 interact with each other more to generate a larger driving force to drive the vibration diaphragm 111, the magnet 1122 is provided in parallel, or approximately in parallel, with the planar coil 1121, i.e., the vibration diaphragm 111, the magnet 1122 and the planar coil 1121 are arranged parallel or approximately parallel. In some embodiments, in order to make the magnet 1122 and the planar coil 1121 driven by the vibration diaphragm 111 more even so that the vibration diaphragm 111 can push the air with a large vibration amplitude, the planar coil 1121 is provided in the middle of the vibration diaphragm 111, and the magnet 1122 is disposed towards the middle of the vibration diaphragm 111on a plane perpendicular to the first direction.

In some embodiments, the material of the planar coil 1121 may include a material such as copper, gold, aluminum, titanium, platinum, or a combination thereof. In some embodiments, the magnet 1122 may include a permanent magnet (e.g., an aluminum-iron boron) and/or an electromagnet. In some embodiments, the material of the magnetic conductor ring 1124 or the magnetic conductor plate 1123 may be a magnetically conductive material. Exemplary magnetically conductive materials may include, but are not limited to, silicon steel, manganese-zinc ferrite, nickel-zinc ferrite, iron, or the like. In some embodiments, the material of the fixing ring 123 may be a semiconductor material.

In some embodiments, the sound-generating unit 110 may be prepared using a semiconductor process. For example, by fabricating a layer of vibration diaphragm corresponding to the vibration diaphragm 111 on a silicon wafer, and then depositing, sputtering, or evaporating a layer of planar coil 1121 on the layer of vibration diaphragm, followed by photolithography and etching to form the desired shape of the planar coil 1121, the planar coil 1121 is then positioned on an upper surface of the vibration diaphragm 111. As another example, on the silicon wafer, a layer of planar coil 1121 is formed through deposition, sputtering, or evaporation, followed by photolithography and etching. On this basis, spin coating, sputtering, or evaporation is used to fabricate a layer of vibration diaphragm, with photolithography and etching employed to form the desired shape of the layer of vibration diaphragm. At this point, the planar coil 1121 is located on a lower surface of the vibration diaphragm 111. Further example, the fixing ring 123 is made of a silicon material, which is obtained through etching of the silicon wafer back cavity. In some embodiments, the sound-generating unit 110 may be prepared using conventional processes. For example, the vibration diaphragm 111 may be directly made of a membrane of a material such as polyimide (PI), polyether ether ketone (peek), etc., or may be spin-coated and cured to form a membrane of a material such as polyimide (PI), polyether ether ketone (peek), etc. The preparation of the planar coil 1121 may be realized by a printing process on the vibration diaphragm 111.

The present embodiment can make the thickness dimension of the loudspeaker 100 smaller by adopting a related structural design such as the planar coil 1121.

FIG. 8 is a schematic diagram illustrating an exemplary structure of the sound-generating unit 110 according to some more embodiments of the present disclosure. The sound-generating unit 110 illustrated in FIG. 8 is similar to the sound-generating unit 110 illustrated in FIG. 7, with the main difference that the vibration diaphragm 111 in FIG. 8 is provided with a first magnet 11221 and a second magnet 11222 on two opposite sides along a first direction, respectively. A front cavity (i.e., the first acoustic cavity 1221) is formed between the vibration diaphragm 111 and the first magnet 11221, and a rear cavity (i.e., the second acoustic cavity 1222) is formed between the vibration diaphragm 111 and the second magnet 11222. When an audio signal is applied to the planar coil 1121, the planar coil 1121 generates electromagnetic waves, and the electromagnetic fields of the first magnet 11221 and the second magnet 11222 intersect, thereby generating a driving force, which drives the vibration diaphragm 111 to vibrate, and the vibration of the vibration diaphragm 111 pushes the air to fluctuate in the front cavity and the rear cavity to generate sound waves.

In some embodiments, a peripheral side of both the first magnet 11221 and the second magnet 11222 is provided with a magnetically conductive material to form a magnetic conductor ring, and both the first magnet 11221 and the second magnet 11222 are connected and fixed to an inner wall of the fixing ring 123 through the magnetic conductor ring, thereby reducing the thickness dimension of the sound-generating unit 110 and the thickness dimension of the loudspeaker 100. In some embodiments, the first magnet 11221 and the second magnet 11222 are both provided with the sound outlet hole121 for transmitting sound waves generated in the front cavity and the rear cavity outward.

In the present embodiment, providing the magnets 1122 on opposite sides of the vibration diaphragm 111 along the first direction can increase the strength of the magnetic field in the region where the planar coil 1121 is located, so as to increase a driving force exerted on the vibration diaphragm 111 and improve a vibration amplitude.

FIG. 9 is a schematic diagram illustrating an exemplary structure of the sound-generating unit 110 according to some other embodiments of the present disclosure. The sound-generating unit 110 shown in FIG. 9 is similar to the sound-generating unit 110 shown in FIG. 8, with the main difference that the vibration diaphragm 111 in FIG. 9 is provided with the first magnet 11221 and the second magnet 11221 on opposite sides along a first direction, respectively. The first magnet 11221 and the second magnet 11222 are both disconnect-type magnets. The disconnect-type magnet refers to the magnet 1122 distributed in a certain shape, and the disconnect-type magnet has a skeletonized region and a magnet region. In some embodiments, the planar coil 1121 is distributed in a ring shape, and the disconnect-type magnet is distributed in a shape that corresponds to a distributed shape of the planar coil 1121. In this regard, a projection of the magnet region of the disconnect-typemagnet 1122 along the first direction overlaps at least partially with a projection of the planar coil 1121 along the first direction. In the present embodiment that, by setting up the disconnect-type magnet and setting up a magnet region corresponding to each ring at the planar coil 1121, these magnet regions corresponding to each ring on the planar coil 1121 can be individually magnetized as needed, allowing for independent control of the magnetic polarity and magnetic field strength at each ring of the planar coil 1121. For example, the magnetic field strength at the middle ring of the planar coil 1121 may be maximized by regulation to increase the vibration amplitude of the vibration diaphragm 111.

In some embodiments, referring to FIG. 4A, the driving structure 112 may include a piezoelectric driving structure (e.g., the piezoelectric driving structure 1125 shown in FIG. 10), and the piezoelectric driving structure includes a piezoelectric material. In some embodiments, the piezoelectric material has a Young's modulus in a range of 30 GPa to 100 GPa to ensure that the rigidity of the driving structure 112 does not unduly restrict the vibration diaphragm 111 from vibrating. Preferably, the piezoelectric material has a Young's modulus in a range of 40 GPa to 90 GPa. Preferably, the piezoelectric material has a Young's modulus in a range of 50 GPa-80 GPa.

FIG. 10 is a schematic diagram illustrating a cross-section of a piezoelectric driving structure according to some embodiments of the present disclosure.

As shown in FIG. 10, the piezoelectric driving structure 1125 includes, from top to bottom along a first direction, a first electrode layer 11251, a first piezoelectric layer 11252, a second electrode layer 11253, a second piezoelectric layer 11254, and a third electrode layer 11255. In some embodiments, the first electrode layer 11251, the first piezoelectric layer 11252, the second electrode layer 11253, the second piezoelectric layer 11254, and the third electrode layer 11255 and the vibration diaphragm 111 are sequentially connected through adjacent side surfaces.

In some embodiments, the material of a piezoelectric layer (the first piezoelectric layer 11252 and the second piezoelectric layer 11254) may include, but not limited to, lead zirconate titanate (PZT) or zinc oxide (ZnO) or aluminum nitride (AlN) and a combination thereof. In some embodiments, the material of an electrode layer (the first electrode layer 11251, the second electrode layer 11253, and the third electrode layer 11255) may include, but not limited to, platinum (Pt), gold (Au), or titanium (Ti) and a combination thereof. In some embodiments, the material of the vibration diaphragm 111 may be a flexible polymer material. Exemplary flexible polymer materials include, but are not limited to, polyimide (PI), polyethylene terephthalate (PET), polyethylene imine (PEI), polyether ether ketone (PEEK), silicone, polycarbonate (PC), vinyl polymers (PVC), acrylonitrile-butadiene-styrene copolymer (ABS), polyethylene (PE), poly(p-xylylene) (PPX), or one or more of these, as well as multilayer composite materials formed by combining these materials. In some embodiments, the flexible polymer material has a Young's modulus in a range of 1 GPa to 9 GPa (e.g., 2 GPa to 8 GPa, 3 GPa to 7 GPa, or 4 GPa to 6 GPa, etc.). In some embodiments, the material of the vibration diaphragm 111 may be a semiconductor material. Exemplary semiconductor materials include, but not limited to, one or more of silicon (Si), silicon dioxide (SiO₂), silicon nitride (SiₓN_{y}), and the like, and may also be a multilayer composite material composite of the above materials. In some embodiments, the semiconductor material has a Young's modulus in a range of 100 GPa to 200 GPa (e.g., 120 GPa to 190 GPa, 130 GPa to 180 GPa, or 140 GPa to 170 GPa, etc.).

In some embodiments, a thickness dimension of the electrode layer is in a range of 80 nm to 200 nm (e.g., 100 nm to 180 nm, 120 nm to 160 nm, or 130 nm to 150 nm, etc.). In some embodiments, when the piezoelectric layer is prepared using processes such as magnetron sputtering or sol-gel techniques in MEMS fabrication, a thickness direction of the piezoelectric layer is in a range of 1 um to 3 um (e.g., 1.5 nm to 2.5 nm, 1.6 nm to 2.8 nm, or 1.8 nm to 2.6 nm, etc.). When the piezoelectric layer is prepared by the sintering process, the thickness dimension of the piezoelectric layer is in a range of 20um to 100um (e.g., 20 nm to 80 nm, 30 nm to 60 nm, or 30 nm to 50 nm, etc.).

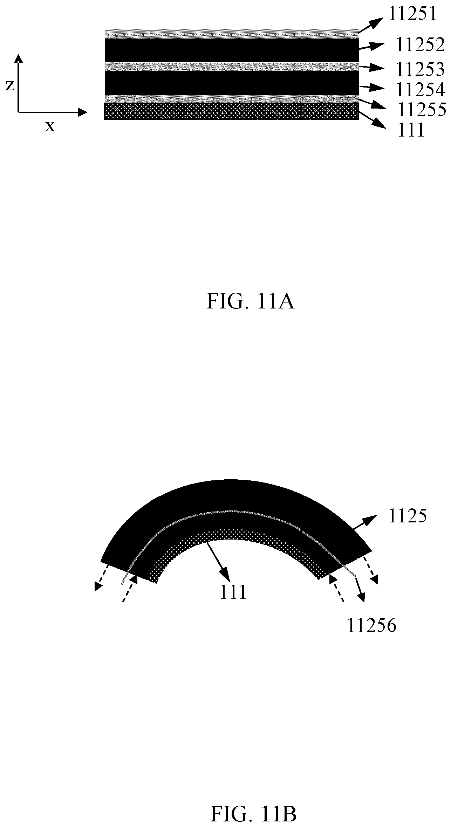

In some embodiments, the piezoelectric driving structure 1125 has a d33 mode and a d31 mode. In some embodiments, a voltage along the first direction is applied to each electrode layer, at which point the piezoelectric layer is subject to stretching deformation (as shown in FIG. 11B) along the first direction and the second direction (referring to an x-direction shown in FIG. 11A). If only the d33 mode along the first direction is relied upon, the deformation of the piezoelectric driving structure 1125 is extremely small, and at this time, the output sound pressure level of the sound-generating unit 110 does not satisfy the actual demand. In order to ensure that the piezoelectric driving structure 1125 can have a large displacement along the first direction so as to make the vibration amplitude of the vibration diaphragm 111 larger, the d31 mode along a direction perpendicular to the first direction may be used.

FIG. 11A is a schematic diagram illustrating an exemplary structure of a piezoelectric driving structure before deformation according to some embodiments of the present disclosure. FIG. 11B is a schematic diagram illustrating an exemplary structure of a piezoelectric driving structure after deformation according to some embodiments of the present disclosure.

In some embodiments, the piezoelectric driving structure 1125 includes a sintered piezoelectric ceramic. The sintered piezoelectric ceramics refers to a piezoelectric ceramic layer (i.e., a piezoelectric layer) prepared using a sintering process. The thickness of the piezoelectric ceramic layer is limited by the process to a thickness dimension greater than 15 um, so the thickness of the piezoelectric ceramic layer is preferably higher than the thickness of the vibration diaphragm 111 (as shown in FIG. 11A), at which time a neutral layer 11256 is located inside the piezoelectric driving structure 1125 (as shown in FIG. 11B).

In some embodiments, when the neutral layer 11256 is located inside the piezoelectric driving structure 1125, to ensure that the piezoelectric driving structure 1125 is capable of having a large displacement along a first direction so as to make the vibration amplitude of the vibration diaphragm 111 larger, polarization directions of the piezoelectric layers and the applied voltage polarity can be designed such that the deformation directions of the materials on both sides of the neutral layer 11256 along the first direction are opposite.

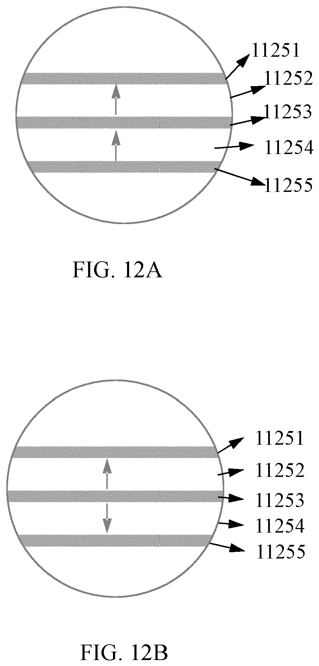

FIG. 12A is a schematic diagram illustrating a polarization direction of each piezoelectric layer of a piezoelectric driving structure according to some embodiments of the present disclosure.

In the case of a two-layer piezoelectric layer, for example, when the first piezoelectric layer 11252 and the second piezoelectric layer 11254 have the same polarization direction (e.g., both facing upward along a first direction as shown in FIG. 12A), to cause the first piezoelectric layer 11252 and the second piezoelectric layer 11254 to deform in opposite directions, i.e., to stretch in one direction and compress in the other direction, potential directions of the first piezoelectric layer 11252 and the second piezoelectric layer 11254 may be opposite. In some embodiments, a first voltage of the first electrode layer 11251 and a third voltage of the third electrode layer 11255 may both be greater than a second voltage of the second electrode layer 11253, and the first voltage of the first electrode layer 11251 and the third voltage of the electrode layer 11255 may also both be less than the second voltage of the second electrode layer 11253. For example, the first voltage is equal to the third voltage, and the second voltage is 0 V.

When the first voltage and the third voltage are both greater than the second voltage, the potential direction of the first piezoelectric layer 11252 is downward along the first direction and is opposite to the polarization direction, and the first piezoelectric layer 11252 compresses, and the potential direction of the second piezoelectric layer 11254 is upward along the first direction and is the same as the polarization direction of the second piezoelectric layer 11254, and the second piezoelectric layer 11254 stretches. As the neutral layer 11256 is located inside the piezoelectric driving structure 1125, the piezoelectric driving structure 1125 as a whole bends and deforms downwardly, and at this time, the sound-generating unit 110 as a whole bends and deforms downwardly, and the vibration diaphragm 111 stretches. When the first voltage and the third voltage are both less than the second voltage, the potential direction of the first piezoelectric layer 11252 is upward along the first direction and is the same as the polarization direction, and the first piezoelectric layer 11252 stretches, and the potential direction of the second piezoelectric layer 11254 is downward along the first direction and is opposite to the polarization direction, and the second piezoelectric layer 11254 compresses. Since the neutral layer 11256 is located inside the piezoelectric driving structure 1125, the piezoelectric driving structure 1125 as a whole bends and deforms upwardly, and at this time, the sound-generating unit 110 as a whole bends and deforms upwardly, and the vibration diaphragm 111 compresses.

FIG. 12B is a schematic diagram illustrating a polarization direction of each piezoelectric layer of a piezoelectric driving structure according to some embodiments of the present disclosure.

In the case of a two-layer piezoelectric layer, for example, when polarization directions of the first piezoelectric layer 11252 and the second piezoelectric layer 11254 are opposite (e.g., as shown in FIG. 12B, the first piezoelectric layer 11252 is polarized in an upward direction along a first direction and the second piezoelectric layer 11254 is polarized in a downward direction along the first direction), in order to deform the first piezoelectric layer 11252 in an opposite direction from the second piezoelectric layer 11254, potential directions of the first piezoelectric layer 11252 and the second piezoelectric layer 11254 may be the same. In some embodiments, a first voltage, a second voltage, and a third voltage may be sequentially decreased or sequentially increased.

When the first voltage, the second voltage, and the third voltage decrease sequentially, the potential direction of the first piezoelectric layer 11252 is downward along the first direction and is opposite to the polarization direction, and the first piezoelectric layer 11252 compresses, and the potential direction of the second piezoelectric layer 11254 is downward along the first direction and is the same as the polarization direction, and the second piezoelectric layer 11254 stretches. As the neutral layer 11256 is located inside the piezoelectric driving structure 1125, the piezoelectric driving structure 1125 as a whole bends and deforms downwardly, and at this time, the sound-generating unit 110 as a whole bends and deforms downwardly, and the vibration diaphragm 111 stretches. When the first voltage, the second voltage, and the third voltage increase sequentially, the potential direction of the first piezoelectric layer 11252 is upward along the first direction and is the same as the polarization direction, and the first piezoelectric layer 11252 stretches; the potential direction of the second piezoelectric layer 11254 is upward along the first direction and is opposite to the polarization direction, and the second piezoelectric layer 11254 compresses. Since the neutral layer 11256 is located inside the piezoelectric driving structure 1125, the piezoelectric driving structure 1125 as a whole bends and deforms upwardly, and at this time, the sound-generating unit 110 as a whole bends and deforms upwardly, and the vibration diaphragm 111 compresses.

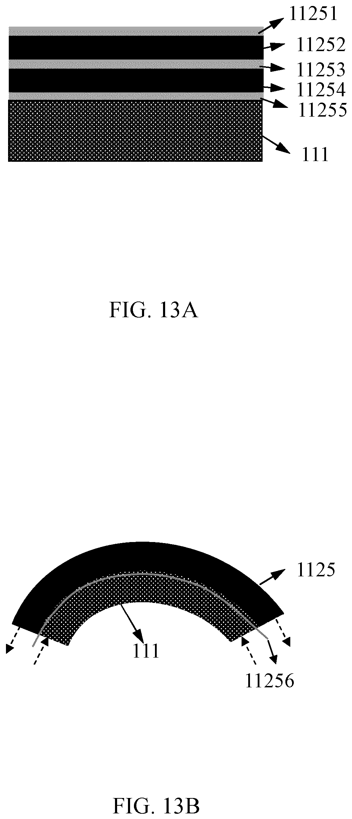

FIG. 13A is a schematic diagram illustrating an exemplary structure of a piezoelectric driving structure before deformation according to some embodiments of the present disclosure. FIG. 13B is a schematic diagram illustrating an exemplary structure of a piezoelectric driving structure after deformation according to some embodiments of the present disclosure.

In some embodiments, the piezoelectric driving structure 1125 includes a MEMS piezoelectric ceramic. MEMS piezoelectric ceramic refers to a piezoelectric ceramic layer (i.e., a piezoelectric layer) prepared using a MEMS (Micro-Electro-Mechanical Systems) process. The thickness of the piezoelectric ceramic layer is small, and thus the thickness of the piezoelectric ceramic layer is preferably less than the thickness of the vibration diaphragm 111, as shown in FIG. 13 A, at this time, the neutral layer 11256 is located outside the piezoelectric driving structure 1125, i.e., located inside the vibration diaphragm 111.

In some embodiments, when the neutral layer 11256 is located outside the piezoelectric driving structure 1125 and inside the vibration diaphragm 111, in order to ensure that the piezoelectric driving structure 1125 is capable of having a larger displacement along a first direction to make the vibration amplitude of the vibration diaphragm 111 is larger, a polarization direction of each piezoelectric layer and the applied voltage polarity can be designed, so that the deformation direction of each material of the piezoelectric driving structure 1125 located on one side of the neutral layer 11256 along the first direction is the same, and so that the deformation directions of the materials located on two sides of the neutral layer 11256 along the first direction are opposite.

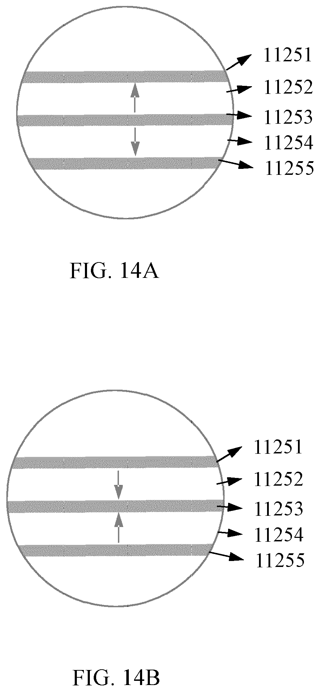

FIG. 14A is a schematic diagram illustrating a polarization direction of each piezoelectric layer of a piezoelectric driving structure according to some embodiments of the present disclosure. FIG. 14B is a schematic diagram illustrating a polarization direction of each piezoelectric layer of a piezoelectric driving structure according to some embodiments of the present disclosure.

Taking a two-layer piezoelectric layer as an example, when polarization directions of the first piezoelectric layer 11252 and the second piezoelectric layer 11254 are opposite, as shown in FIG. 14A, the polarization direction of the first piezoelectric layer 11252 is upward along a first direction, and the polarization direction of the second piezoelectric layer 11254 is downward along the first direction. Or, as shown in FIG. 14B, the polarization direction of the first piezoelectric layer 11252 is downward along the first direction, and the polarization direction of the second piezoelectric layer 11254 is upward along the first direction. In order to make the deformation of the first piezoelectric layer 11252 the same as that of the second piezoelectric layer 11254, potential directions of the first piezoelectric layer 11252 and the second piezoelectric layer 11254 are opposite. In some embodiments, a first voltage of the first electrode layer 11251 and a third voltage of the third electrode layer 11255 may both be greater than a second voltage of the second electrode layer 11253, the first voltage of the first electrode layer 11251 and the third voltage of the third electrode layer 11255 may also both be less than the second voltage of the second electrode layer 11253.

In FIG. 14A, when the first voltage and the third voltage are both greater than the second voltage, the potential direction of the first piezoelectric layer 11252 is downward along the first direction and is opposite to the polarization direction, and the first piezoelectric layer 11252 compresses and the potential direction of the second piezoelectric layer 11254 is upward along the first direction and is opposite to the polarization direction of the second piezoelectric layer 11254, and the second piezoelectric layer 11254 compresses. Since the neutral layer 11256 is located outside the piezoelectric driving structure 1125 and inside the vibration diaphragm 111, the piezoelectric driving structure 1125 compresses as a whole, the vibration diaphragm 111 stretches, and the sound-generating unit 110 bends and deforms as a whole downwardly. When both the first voltage and the third voltage are less than the second voltage, the potential direction of the first piezoelectric layer 11252 is upward along the first direction and is the same as the polarization direction, and the first piezoelectric layer 11252 stretches, and the potential direction of the second piezoelectric layer 11254 is downward along the first direction and is the same as the polarization direction, and the second piezoelectric layer 11254 stretches. Since the neutral layer 11256 is located outside the piezoelectric driving structure 1125 and inside the vibration diaphragm 111, the piezoelectric driving structure 1125 stretches as a whole, the vibration diaphragm 111 compresses, and the sound-generating unit 110 bends and deforms as a whole upwardly.

In FIG. 14B, when the first voltage and the third voltage are both greater than the second voltage, the potential direction of the first piezoelectric layer 11252 is downward along the first direction is the same as the polarization direction, and the first piezoelectric layer 11252 stretches, and the potential direction of the second piezoelectric layer 11254 is upward along the first direction and is the same as the polarization direction, and the second piezoelectric layer 11254 stretches. Since the neutral layer 11256 is located outside the piezoelectric driving structure 1125 and inside the vibration diaphragm 111, the piezoelectric driving structure 1125 stretches as a whole, the vibration diaphragm 111 compresses, and the sound-generating unit 110 bends and deforms as a whole upwardly. When both the first voltage and the third voltage are less than the second voltage, the potential direction of the first piezoelectric layer 11252 is upward along the first direction and is opposite to the polarization direction, and the first piezoelectric layer 11252 compresses, and the potential direction of the second piezoelectric layer 11254 is downward along the first direction and is opposite to the polarization direction, and the second piezoelectric layer 11254 compresses. Since the neutral layer 11256 is located outside the piezoelectric driving structure 1125 and inside the vibration diaphragm 111, the piezoelectric driving structure 1125 compresses as a whole, the vibration diaphragm 111 stretches, and the sound-generating unit 110 bends and deforms as a whole downwardly.

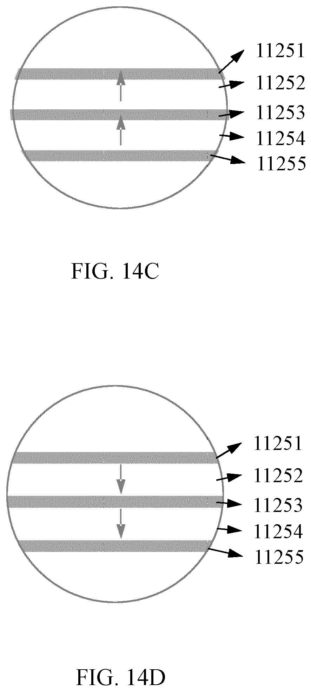

FIG. 14C is a schematic diagram illustrating a polarization direction of each piezoelectric layer of a piezoelectric driving structure according to some embodiments of the present disclosure. FIG. 14D is a schematic diagram illustrating a polarization direction of each piezoelectric layer of a piezoelectric driving structure according to some embodiments of the present disclosure.

In the case of a two-layer piezoelectric layer, for example, when polarization directions of the first piezoelectric layer 11252 and the second piezoelectric layer 11254 are the same, as shown in FIG. 14C, the polarization directions of the first piezoelectric layer 11252 and the second piezoelectric layer 11254 are upward along a first direction. Or, as shown in FIG. 14D, the polarization directions of the first piezoelectric layer 11252 and the second piezoelectric layer 11254 are both downward along the first direction. In order to make the deformation of the first piezoelectric layer 11252 as the same as that of the second piezoelectric layer 11254, potential directions of the first piezoelectric layer 11252 and the second piezoelectric layer 11254 are the same. In some embodiments, a first voltage, a second voltage, and a third voltage may be sequentially decreased or sequentially increased.

In FIG. 14C, when the first voltage, the second voltage, and the third voltage decrease sequentially, the potential direction of the first piezoelectric layer 11252 is downward along the first direction and is opposite to the polarization direction, and the first piezoelectric layer 11252 compresses, and the potential direction of the second piezoelectric layer is downward along the first direction and is opposite to the polarization direction, and the second piezoelectric layer 11254 compresses. Since the neutral layer 11256 is located outside the piezoelectric driving structure 1125 and inside the vibration diaphragm 111, the piezoelectric driving structure 1125 compresses as a whole, the vibration diaphragm 111 stretches, and the sound-generating unit 110 bends and deforms as a whole downwardly. When the first voltage, the second voltage, and the third voltage are increased sequentially, the potential direction of the first piezoelectric layer 11252 is upward along the first direction and is the same as the polarization direction, and the first piezoelectric layer 11252 stretches; the potential direction of the second piezoelectric layer 11254 is upward along the first direction and is the same as the polarization direction, and the second piezoelectric layer 11254 stretches. Since the neutral layer 11256 is located outside the piezoelectric driving structure 1125 and inside the vibration diaphragm 111, the piezoelectric driving structure 1125 stretches as a whole, the vibration diaphragm 111 compresses, and the sound-generating unit 110 bends and deforms as a whole upwardly.

In FIG. 14D, when the first voltage, the second voltage, and the third voltage decrease sequentially, the potential direction of the first piezoelectric layer 11252 is downward along the first direction and is the same as the polarization direction, and the first piezoelectric layer 11252 stretches, and the potential direction of the second piezoelectric layer 11254 is downward along the first direction and is the same as the polarization direction, and the second piezoelectric layer 11254 stretches. Since the neutral layer 11256 is located outside the piezoelectric driving structure 1125 and inside the vibration diaphragm 111, the piezoelectric driving structure 1125 stretches as a whole, the vibration diaphragm 111 compresses, and the sound-generating unit 110 bends and deforms as a whole upwardly. When the first voltage, the second voltage, and the third voltage are increased sequentially, the potential direction of the first piezoelectric layer 11252 is upward along the first direction and is opposite to the polarization direction, and the first piezoelectric layer 11252 compresses; the potential direction of the second piezoelectric layer 11254 is upward along the first direction and is opposite to the polarization direction, and the second piezoelectric layer 11254 compresses. Since the neutral layer 11256 is located outside the piezoelectric driving structure 1125 and inside the vibration diaphragm 111, the piezoelectric driving structure 1125 compresses as a whole, the vibration diaphragm 111 stretches, and the sound-generating unit 110 bends and deforms as a whole downwardly.

In some embodiments, in order to conform to the battery power supply capacity and power consumption of commonly used consumer electronic products such as earphones and audio glasses, the absolute value of a first driving voltage and the absolute value of a second driving voltage are both no higher than 5V. The first driving voltage of the first piezoelectric layer 11252 is a difference between the first voltage and the second voltage, and the second driving voltage of the second piezoelectric layer 11254 is a difference between the second voltage and the third voltage.

An overhanging region on the vibration diaphragm 111 is a region where the vibration diaphragm 111 is suspended within the acoustic cavity 122. The overhanging region refers to a region of a surface region of the vibration diaphragm 111 minus a region where the vibration diaphragm 111 is in contact with the fixing ring 123. In some embodiments, the overhanging region includes a piezoelectric covering region and a piezoelectric non-covering region. The piezoelectric covering region refers to the surface region of the vibration diaphragm 111 on which the piezoelectric driving structure 1125 is projected on the vibration diaphragm 111 along the first direction. The piezoelectric non-covering region refers to the surface region of the vibration diaphragm 111 outside the piezoelectric covering region. The surface region of the vibration diaphragm 111 refers to a surface region of the vibration diaphragm 111 perpendicular to the first direction.

In some embodiments, since the thickness of the vibration diaphragm 111 of the sintered piezoelectric ceramic is less than the thickness of the piezoelectric layer, the vibration diaphragm 111 has no significant effect on the resonant frequency and the output sound pressure level of the loudspeaker 100, and the output sound pressure level of the loudspeaker 100 is mainly influenced by the dimension of the piezoelectric driving structure 1125.

A parameter β is defined as a ratio of an area Sq of the piezoelectric covering region to an area Sp of the overhanging region of the vibration diaphragm 111. The area of the piezoelectric covering region refers to an area of the piezoelectric covering region of the vibration diaphragm 111, and the area of the overhanging region of the vibration diaphragm 111 refers to an area of the overhanging region of the vibration diaphragm 111.

When β is large, the area of the piezoelectric covering region is large and more piezoelectric material is involved in the drive, thus pushing the air volume to increase and the output sound pressure level to increase, and when β is small, the corresponding output sound pressure level decreases.

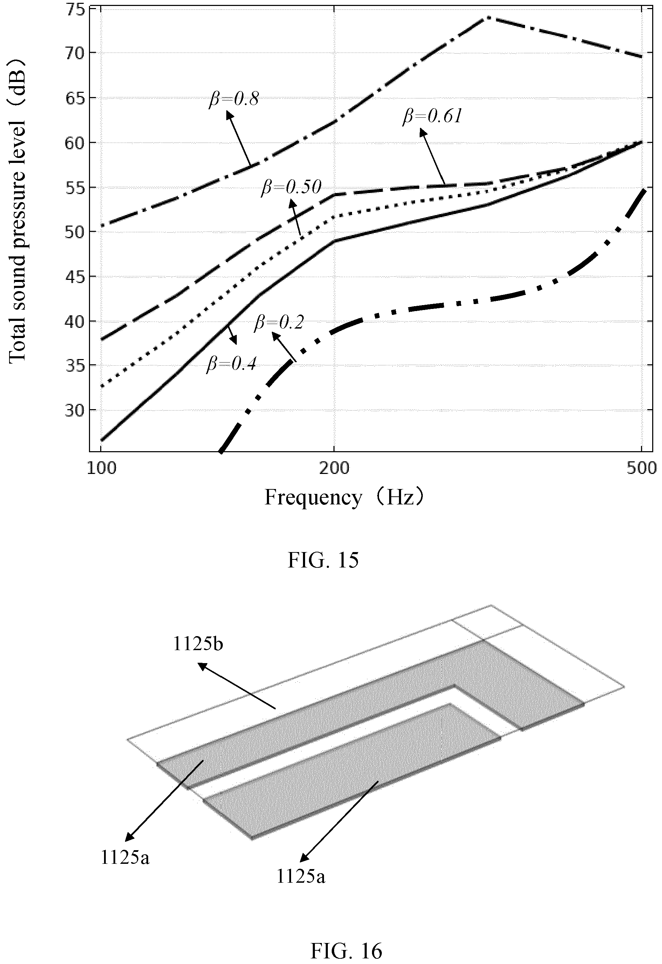

FIG. 15 is a diagram illustrating frequency response curves of a loudspeaker corresponding to different values of β according to some embodiments of the present disclosure.

As shown in FIG. 15, the output sound pressure level of the loudspeaker 100 is low when β=0.2; when β=0.4, there is a significant enhancement of the output sound pressure level as compared to that when β=0.2; and when β continues to increase, for example, when β =0.5, 0.61 or 0.8, the output sound pressure level of the loudspeaker 100 is further improved. Thus, in some embodiments, β is ≥0.4. Preferably, β is ≥ 0.61.

FIG. 16 is a schematic diagram illustrating an exemplary structure of 1/4 of a piezoelectric driving structure according to some embodiments of the present disclosure.

As shown in FIG. 16, the piezoelectric driving structure 1125 includes a plurality of separated structures. A first portion of the piezoelectric driving structure 1125 is located at the center region of the vibration diaphragm 111, and a second portion of the piezoelectric driving structure 1125 is disposed around the first portion. Accordingly, the piezoelectric covering region 1125a on the vibration diaphragm 111 may be divided into two parts: a first piezoelectric covering region located at the center region of the vibration diaphragm 111 and a second piezoelectric covering region surrounding the first piezoelectric covering region, with the second piezoelectric coverage region being annular. A remaining region of a surface region of the vibration diaphragm 111 after dividing the piezoelectric covering region 1125a is piezoelectric non-covering region 1125b.

In some embodiments, since the thickness of the vibration diaphragm 111 of the piezoelectric ceramic prepared by the MEMS process is greater than the thickness of the piezoelectric layer, the vibration diaphragm 111 has a significant effect on the resonant frequency and the output sound pressure level of the loudspeaker 100. The compliance of the vibration diaphragm 111 mainly originates from the piezoelectric non-covering region 1125b. When an area of the piezoelectric non-covering region 1125b is small, this results in the compliance of the piezoelectric non-covering region 1125b being too small and the resonant frequency of the loudspeaker 100 being higher, and when the area of the piezoelectric non-covering region 1125b is larger, this results in the compliance of the piezoelectric non-covering region 1125b being too large, generating localized higher-order modes in a lower frequency range and affecting the output of the loudspeaker 100.

The parameter α is defined as a ratio of the area Sd of the piezoelectric covering region to an overhanging area Sp of the vibration diaphragm 111. The area of the piezoelectric covering region shown in FIG. 16 is a sum of the area of the first piezoelectric covering region and the area of the second piezoelectric covering region.

When α is large, the area of the piezoelectric non-covering region is large, and the piezoelectric non-covering region is too large to be compliant, generating localized higher-order modes at a lower frequency range, resulting in a lower output of loudspeaker 100. When α is small, the area of the piezoelectric non-covering region is small, the compliance of the piezoelectric non-covering region decreases, the resonance frequency increases, and the output sound pressure level in the frequency band after the resonance frequency increases.

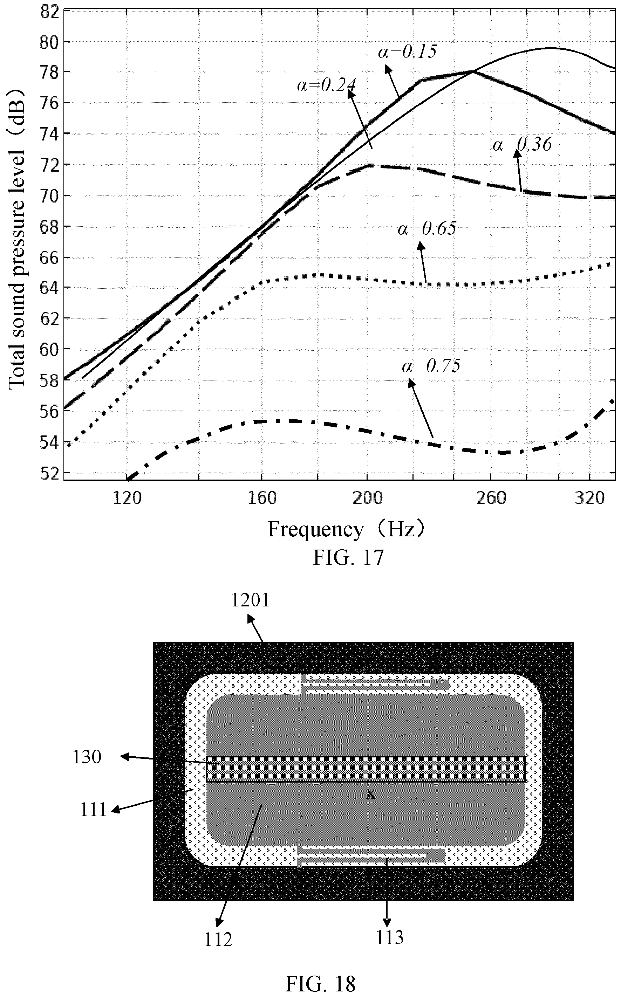

FIG. 17 is a diagram illustrating frequency response curve of different values of α of a loudspeaker according to some embodiments of the present disclosure.

As shown in FIG. 17, when α=0.75, the resonance frequency of the loudspeaker 100 is low, the output sound pressure level is low, and a peak and valley of the frequency response are obvious; when α=0.65, compared to α=0.75, there is a significant improvement in the output sound pressure level, with the improvement being more than 10 dB; and when α continues to decrease, for example, when α=0.36, 0.24, or 0.15, the resonance frequency of the loudspeaker 100 increases, and the output sound pressure level in a frequency range after the resonance frequency is further improved. Therefore, in some embodiments, α is ≤0.65. Preferably, α is ≤ 0.36.

In some embodiments, to adjust the resonance frequency as well as the vibration mode of the loudspeaker 100, the loudspeaker 100 may further include a mass block 130. The mass block 130 is configured to adjust the mass and stiffness of the vibration diaphragm 111, such that the output sound pressure level of the loudspeaker 100 is improved.

The vibration diaphragm 111 or the driving structure 112 has a long-axis direction and a short-axis direction. The long-axis direction refers to a direction extending along a long axis (referring to the x-axis shown in FIG. 5) and the short-axis direction refers to a direction extending along a short axis (referring to the y-axis shown in FIG. 5).

In some embodiments, the mass block 130 is arranged along the long-axis direction, where a dimension of the mass block 130 is equal to or less than a dimension of the piezoelectric driving structure 1125 along the long-axis direction. In some embodiments, the ratio of the dimension of the mass block 130 along the long-axis direction (referred to as a long-axis dimension) to a long-axis dimension of the piezoelectric driving structure 1125 is less than or equal to 1. In some embodiments, the mass block 130 is arranged along the short-axis direction, and the dimension of the mass block 130 is equal to or less than the dimension of the piezoelectric driving structure 1125 along the short axis direction. In some embodiments, the ratio of the dimension of the mass block 130 along the short-axis direction (referred to as a short-axis dimension) to a short-axis dimension of the piezoelectric driving structure 1125 is less than or equal to 1.

FIG. 18 is a schematic diagram illustrating the arrangement of a mass block according to some embodiments of the present disclosure.

As shown in FIG. 18, the mass block 130 is arranged on the sound-generating unit 110 and is arranged along the long-axis direction. In some embodiments, the mass block 130 is arranged on the piezoelectric driving structure 1125. In some embodiments, the mass block 130 is arranged, or proximally arranged, at a short axis of the piezoelectric driving structure 1125.

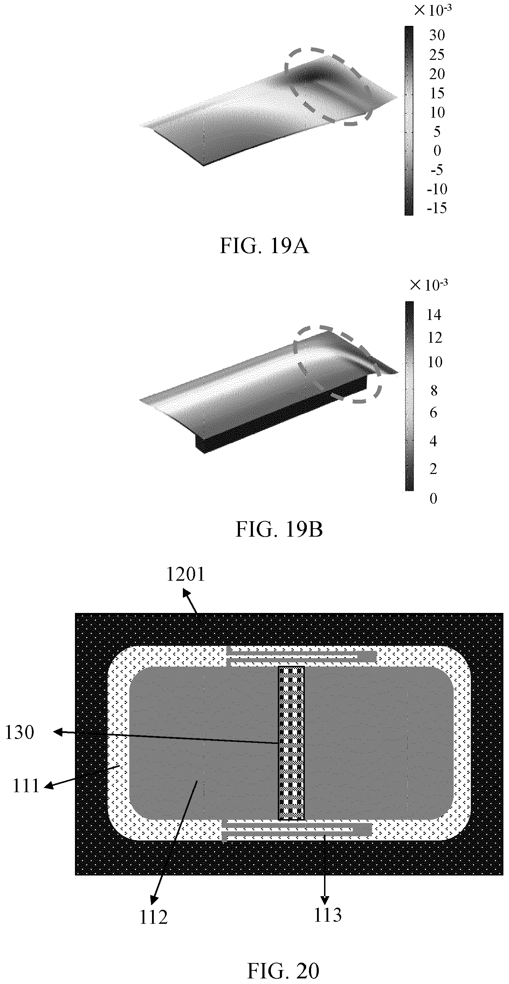

FIG. 19A is a deformation contour plot diagram of a vibration diaphragm without a mass block. As shown in FIG. 19A, a piezoelectric non-covering region of the vibration diaphragm 111 close to the shell 120 along the long-axis direction produces a localized concave deformation, which is opposite to the deformation direction of the other regions of the vibration diaphragm 111, thereby reducing the overall volume of air pushed by the vibration diaphragm 111, thereby reducing the output sound pressure level of the loudspeaker 100.

FIG. 19B is a deformation contour plot diagram illustrating a vibration diaphragm with a mass block. As shown in FIG. 19B, by setting the mass block 130 along the long-axis direction, it is possible to cause a piezoelectric non-covering region of the vibration diaphragm 111 close to the shell 120 in the long-axis direction to be driven into motion, which is consistent with the deformation of the other regions of the vibration diaphragm 111.

FIG. 20 is a schematic diagram illustrating the arrangement of the mass block according to some embodiments of the present disclosure.

As shown in FIG. 20, the mass block 130 is arranged on the sound-generating unit 110 and is arranged along the short-axis direction. In some embodiments, the mass block 130 is arranged on the piezoelectric driving structure 1125. In some embodiments, the mass block 130 is arranged, or proximally arranged, at a long axis of the piezoelectric driving structure 1125.

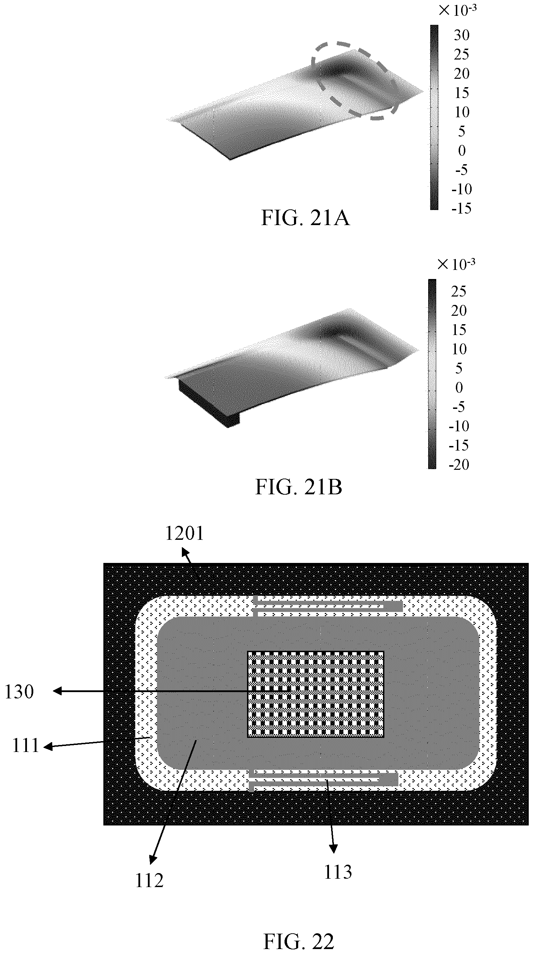

FIG. 21A is a deformation contour plot diagram of a vibration diaphragm without a mass block. As shown in FIG. 21A, a piezoelectric non-covering region of the vibration diaphragm 111 close to the shell 120 along the long-axis direction produces a localized concave deformation, which is opposite to the deformation direction of other regions of the vibration diaphragm 111, thereby reducing the overall volume of air pushed by the vibration diaphragm 111, thereby reducing the output sound pressure level of the loudspeaker 100.

FIG. 21B is a deformation contour plot diagram illustrating a vibration diaphragm with a mass block. As shown in FIG. 21B, by setting the mass block 130 along the short-axis direction, although it is not possible to ameliorate the depression of the piezoelectric non-covering region of the vibration diaphragm 111 close to the shell 120 along the long-axis direction, it makes the absolute value of the maximum displacement the center portion of the loudspeaker 100 of the sound-generating unit 110 increase from 15 um to 20 um, and the absolute value of the displacement of the depression region of the piezoelectric non-covering region along the opposite direction to the center portion is reduced from 30 um to 25 um, the amount of mutual offsetting of the sound caused by the displacement of the center portion along the opposite direction to the depression region of the piezoelectric non-covering region may be reduced, and thus the overall volume of air pushed can be effectively increased, thereby increasing the output sound pressure level.

FIG. 22 is a schematic diagram illustrating the arrangement of the mass block according to some embodiments of the present disclosure.

As shown in FIG. 20, the mass block 130 is arranged on the sound-generating unit 110, and the mass block 130 has a certain dimension along the long-axis direction and along the short-axis direction, such that the mass block 130 is arranged along the long-axis direction and the short-axis direction. In some embodiments, the mass block 130 is arranged on the piezoelectric driving structure 1125. In some embodiments, the mass block 130 is arranged, or proximally arranged, in a middle region of the piezoelectric driving structure 1125. In some embodiments, the long-axis dimension of the mass block 130 is equal to or less than the long-axis dimension of the piezoelectric driving structure 1125, and the short-axis dimension of the mass block 130 is equal to or less than the short-axis dimension of the piezoelectric driving structure 1125.

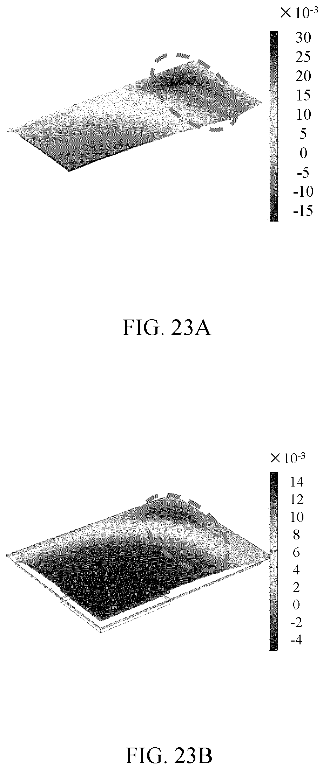

FIG. 23A is a deformation contour plot diagram illustrating a vibration diaphragm without a mass block. As shown in FIG. 23A, a piezoelectric non-covering region of the vibration diaphragm 111 close to the shell 120 along the long-axis direction produces a localized concave deformation, which is opposite to the deformation direction of other regions of the vibration diaphragm 111, thereby reducing the overall volume of air pushed by the vibration diaphragm 111, thereby reducing the output sound pressure level of the loudspeaker 100.

FIG. 23B is a deformation contour plot diagram illustrating a vibration diaphragm with a mass block. As shown in FIG. 23 B, by setting the mass block 130 along the long-axis direction and the short-axis direction, it is possible to make the piezoelectric non-covering region of the vibration diaphragm 111 close to the shell 120 along the long-axis direction to be driven into motion together and be consistent with the deformation of other regions of the vibration diaphragm 111. At the same time, the maximum displacement of the sound-generating unit 110 of the loudspeaker 100 increase, which can effectively increase the overall amount of air pushed, and thus increase the output sound pressure level.

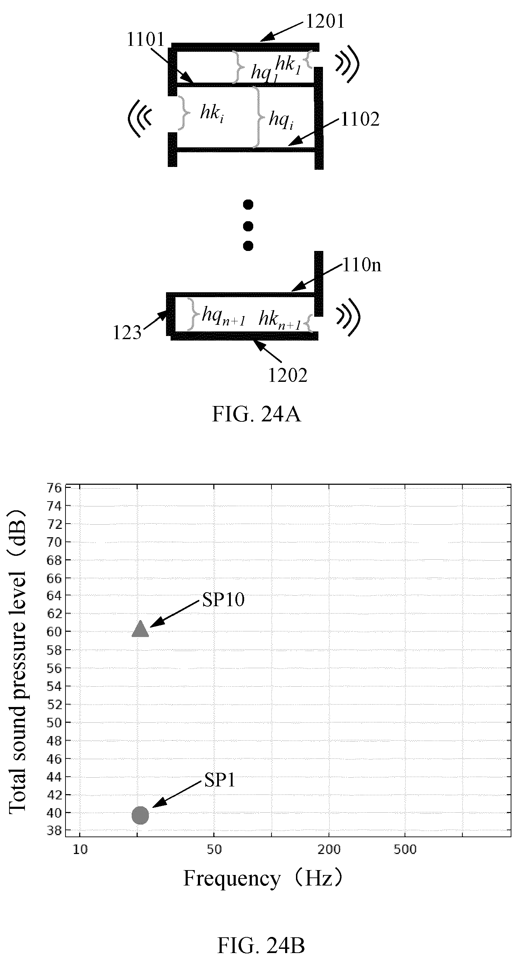

FIG. 24A is a schematic diagram illustrating an exemplary structure of a stacked (10-layer) loudspeaker according to some embodiments of the present disclosure. FIG. 24B is a diagram illustrating frequency response curves of a stacked loudspeaker and a single-layer loudspeaker according to some embodiments of the present disclosure.

Some embodiments of the present disclosure take a stacked-layer loudspeaker including 10 (layer) sound-generating units 110 as an example, and compare it with a single-layer loudspeaker under the same conditions (e.g., same material, same structural dimensions, etc.). As shown in FIG. 24A, the height of the first acoustic cavity 1221 formed between the front shell 1201 and the adjacent first sound-generating unit 1101 of the front shell 1201 along a first direction is denoted as hq₁, and the height of the first sound outlet hole 1211 coupled to the first acoustic cavity 1221 along the first direction is denoted as hk₁; the height of the third acoustic cavity 1223 formed between two adjacent sound-generating units 110 (e.g., the i-1st sound-generating unit 110i-1 and the i-th sound-generating unit 110i) along the first direction is denoted as hqᵢ, and the height of the i-th sound outlet hole 121i coupled to the third acoustic cavity 1223 along the first direction is denoted as hkᵢ; the height of the second acoustic cavity 1222 formed between the rear shell 1202 and the adjacent n-th sound-generating unit 110n of the rear shell 1202 along the first direction is denoted as hqₙ₊₁, and the height of the n+1st sound outlet hole 121(n+1) coupled to the second acoustic cavity 1222 along the first direction is denoted as hkₙ₊₁. Where, i is an integer greater than 1 and less than n.

As shown in FIG. 24B, SP10 represents the output sound pressure level of a stacked (10-layer) loudspeaker, and SP1 represents the output sound pressure level of a single-layer loudspeaker. When hqᵢ=300um, hq₁=hqₙ₊₁=150um, hkᵢ=100um, and hk₁=hkₙ₊₁=50um, at the same frequency, the output sound pressure level of the stacked loudspeaker (SP10 shown in FIG. 24B) is about 60 dB, whereas that of the single-layer loudspeaker (SP1 shown in FIG. 24B) is about 40 dB, thus showing that the output sound pressure level of the stacked loudspeaker is increased by approximately 20 dB (20 × log₁₀ (10))compared to the output sound pressure level of the single-layer loudspeaker. Further, when hqᵢ=300um, hq₁=hqₙ₊₁=150um, hkᵢ=100um, and hk₁=hkₙ₊₁=50um, the stacked loudspeaker does not experience a reduction in output sound pressure level due to the small height of the acoustic cavity 122 and the sound outlet hole 121 coupled with the acoustic cavity 122.

Understandably, when the height of the acoustic cavity 122 and the sound outlet hole 121 coupled with the acoustic cavity 122 is certain, in the case of ensuring that the structural strength of the loudspeaker 100 is not affected, the larger the width of the sound outlet hole 121 along the direction perpendicular to the first direction is, i.e., the larger the area of the sound outlet hole 121 is, the smaller its acoustic resistance is, and the larger the output sound pressure level may be. Thus, the height of the acoustic cavity 122 in the stacked loudspeaker and the sound outlet hole 121 coupled to the acoustic cavity 122 along the first direction is preferably that hqᵢ ≥ 300um, hq₁ ≥ 150um, hqₙ₊₁≥150um, hkᵢ≥100um, hk₁≥50um, hkₙ₊₁≥50um.

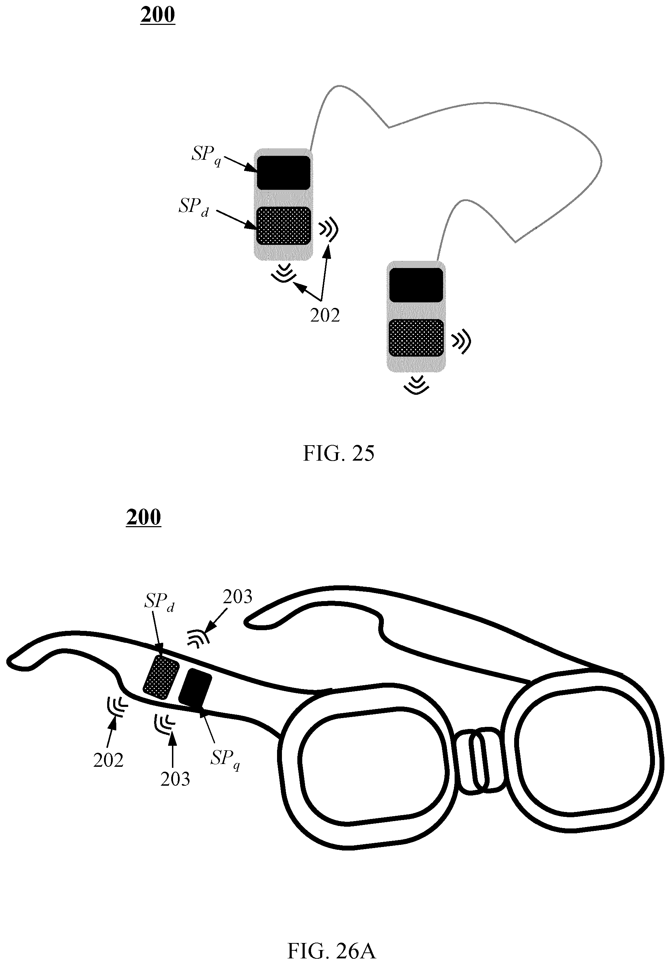

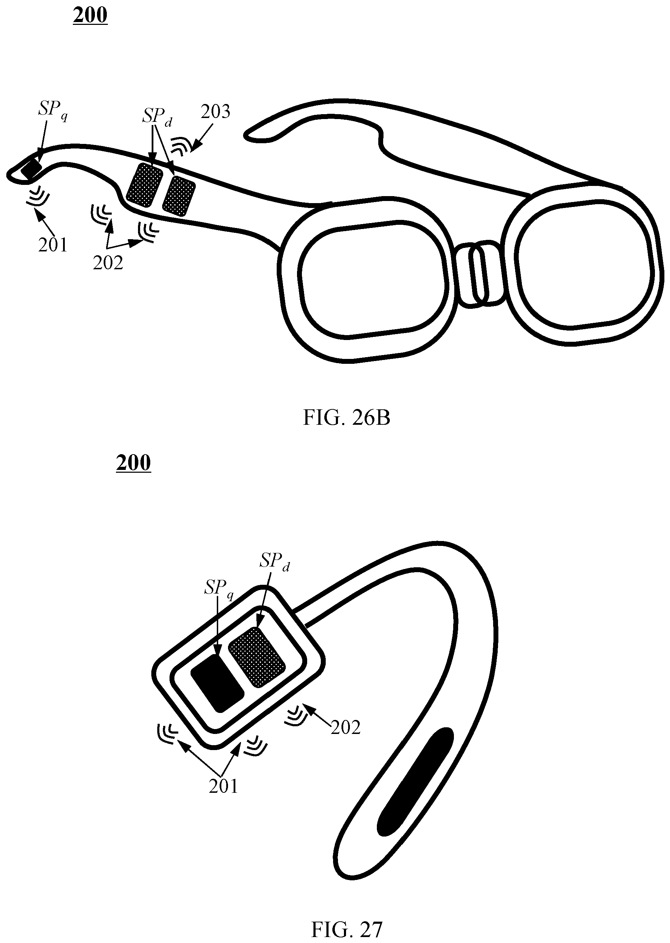

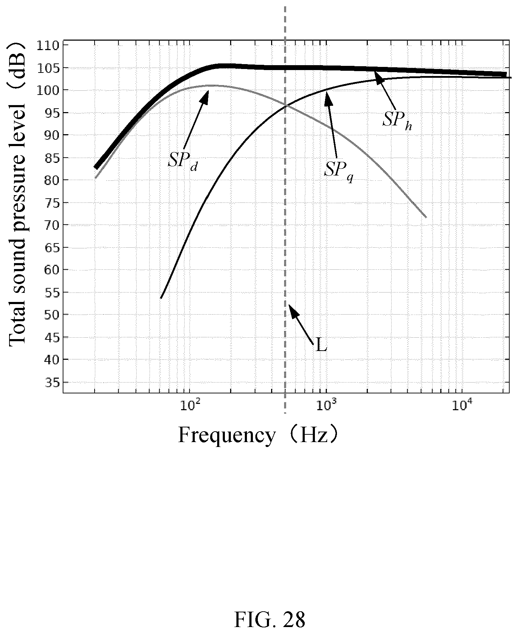

FIG. 25 is a schematic diagram illustrating an acoustic output device according to some embodiments of the present disclosure; FIG. 26A is a schematic diagram I illustrating an acoustic output device according to some other embodiments of the present disclosure; FIG. 26B is a schematic diagram II illustrating an acoustic output device according to some embodiments of the present disclosure; FIG.27 is a schematic diagram illustrating an acoustic output device according to some other embodiments of the present disclosure; and FIG. 28 is a diagram illustrating frequency response curves of an acoustic output device according to some embodiments of the present disclosure.

In some embodiments, the present disclosure provides an acoustic output device, comprising: a low-frequency unit and a high-frequency unit. The low-frequency unit includes the loudspeaker 100 as described in FIG. 1A to FIG. 24B, and the related descriptions thereof.

In some embodiments, the acoustic output device 200 includes one or more of a rear-hook earphone, an ear-hook earphone, an in-ear earphone, or eyeglasses.

In some embodiments, the acoustic output device 200 includes at least one low-frequency unit and at least one high-frequency unit. As shown in FIG. 25, for open earphones, a low-frequency unit and a high-frequency unit may be provided on each side of the earphones, respectively.

As shown in FIG. 26B, for open audio eyeglasses, two low-frequency units and one high-frequency unit may be arranged on each temple on two sides, respectively to enhance the output sound pressure level at low frequencies.

As shown in FIG. 28, SPd denotes a low-frequency unit, SPq denotes a high-frequency unit, SPh denotes an acoustic output device 200 after the crossover combination, and the dashed line indicates a crossover line L (i.e., the straight line where the frequency corresponding to the intersection point of the frequency response curves of SPd and SPq lies). In some embodiments, the intersection point of the frequency response curves of the low-frequency unit and the high-frequency unit is in a range of 300Hz to 1000Hz, i.e., the crossover line L is in a range of 300Hz to 1000Hz.

A low-frequency unit refers to a structural unit in the acoustic output device 200 that is capable of achieving a better sound pressure level output in the low-frequency band. In some embodiments, the low-frequency unit includes, but is not limited to, an air-conducting piezoelectric stacked loudspeaker (e.g., the loudspeaker 100), etc.

In some embodiments, the low-frequency unit operates in a first frequency range with the crossover line L as the upper boundary. The upper boundary of the first frequency range is in a range of 300 Hz to 1000 Hz. In some embodiments, the upper boundary of the first frequency range may also lie within other suitable ranges. For example, the upper boundary of the first frequency range is in a range of 300Hz to 1500Hz, etc. In some embodiments, the first frequency range may be referred to as a low-frequency band.

In some embodiments, since the air-conducting piezoelectric stacked loudspeaker (e.g., the loudspeaker 100) is capable of outputting a larger sound pressure level in the low-frequency band, the air-conducting piezoelectric stacked loudspeaker (e.g., the loudspeaker 100) may be employed in the low-frequency band to better achieve a more full-bodied low-frequency effect.

The high-frequency unit refers to a structural unit in the acoustic output device 200 that is capable of achieving a better sound pressure level output in the high-frequency band. In some embodiments, the high-frequency unit includes an air-conducting loudspeaker and/or a bone-conducting loudspeaker.

In some embodiments, the high-frequency unit operates in at least a second frequency range with the crossover line L as the lower boundary. In some embodiments, the second frequency range is referred to as the high-frequency band. As shown in FIG. 25 to FIG. 28, when the high-frequency unit is a bone-conducting loudspeaker, since the bone-conducting loudspeaker is capable of outputting a large sound pressure level in the high-frequency band and is slightly insufficient in the low-frequency band, in order to realize the effect of a full sound in the full-frequency band, the acoustic output device 200 adopts a manner that combines the bone-conducting loudspeaker in conjunction with the air-conducting piezoelectric stacked loudspeaker (e.g., the loudspeaker 100), where the bone-conducting loudspeaker generates the high-frequency sounds, and the air-conducting piezoelectric stacked loudspeaker (e.g., the loudspeaker 100) generates the low-frequency sounds. It should be understandable that in some embodiments, the bone-conducting loudspeaker may operate in the low-frequency band in addition to the high-frequency band to further enhance the low-frequency effect. At this point, the output of the air-conducting piezoelectric stacked loudspeaker (e.g., the loudspeaker 100) dominates in the low-frequency band.

As shown in FIG. 25 to FIG. 27, the high-frequency unit of the acoustic output device 200 may also be an air-conducting loudspeaker, at which point the acoustic output device may be either of a crossover design or not, i.e., the air-conducting loudspeaker (the high-frequency unit) may operate only in the high-frequency band (the second frequency range), or it may operate in the low-frequency band and the high-frequency band at the same time. At this point, the output of the air-conducting loudspeaker is superimposed with that of the air-conducting piezoelectric stacked loudspeaker (e.g., the loudspeaker 100) in the low-frequency range to further enhance the low-frequency effect.

In some embodiments, the acoustic output device 200 has a height direction parallel to the first direction and a thickness direction perpendicular to the first direction. The low-frequency unit is disposed parallel to the high-frequency unit along the height direction, and the low-frequency unit is disposed on a side below the high-frequency unit; alternatively, the low-frequency unit and the high-frequency unit are disposed parallel to each other along the thickness direction, and the high-frequency unit is disposed on the acoustic output device 200 closer to a side of the user.

The height direction parallel to the first direction can be understood as a direction parallel to the front face of the acoustic output device 200 closer to the user, and the thickness direction perpendicular to the first direction can be understood as the direction perpendicular to the front surface of the acoustic output device 200 that is closest to the user.

In some embodiments of the present disclosure, by setting the high-frequency unit on the side of the acoustic output device 200 close to the user, when the high-frequency unit employs the bone-conducting loudspeaker 100, the transmission of the sound can be more favorable to improve the user experience.

As shown in FIG. 25 to FIG. 27, the high-frequency unit is acoustically coupled to a first hole portion 201 disposed in the acoustic output device 200, and the low-frequency unit is acoustically coupled to a second hole portion 202 disposed in the acoustic output device 200, the first hole portion 201 and the second hole portion 202 are both provided towards a user for better sound output. The first hole portion 201 and the second hole portion 202 are the same hole or different holes.

As shown in FIG. 25, when the high-frequency unit of the acoustic output device 200 employs a bone-conducting loudspeaker 100SP_{g}, there is no need to arrange the first hole portion 201 acoustically coupled to the high-frequency unit at this time.

In some embodiments, the first hole portion 201 and the second hole portion 202 being the same hole can be understood to mean that the first hole portion 201 and the second hole portion 202 are the hole portions of the sound output shared by the high-frequency unit and the low-frequency unit; and the first hole portion 201 and the second hole portion 202 being different holes can be understood to mean that the first hole portion 201 and the second hole portion 202 are independently disposed holes for sound output. By separately arranging the first hole portion 201 and the second hole portion 202 for acoustic coupling with the high-frequency unit and the low-frequency unit, the cavities of the high-frequency unit and the low-frequency unit can be isolated, which is conducive to improving the effect of the sound transmission.

In some embodiments, the acoustic output device 200 includes a plurality of hole portions for sound output. For example, the acoustic output device 200 includes one first hole portion 201 acoustically coupled to the high-frequency unit and two second hole portions 202 acoustically coupled to the low-frequency unit; or, the acoustic output device 200 includes two first hole portions 201 acoustically coupled to the high-frequency unit and one second hole portion 202 acoustically coupled to the low-frequency unit (as shown in FIG. 27). As another example, the acoustic output device 200 either includes the first hole portion 201 and the second hole portion 202, which are independently arranged and acoustically coupled to the high-frequency unit and the low-frequency unit, respectively, or includes a third hole portion 203, which serves as a sound output hole shared by either the high-frequency unit and the low-frequency unit or two low-frequency units (as shown in FIG. 26A to FIG. 26B).

Beneficial effects that may be brought about by embodiments of the present disclosure include, but are not limited to: 1) based on the fact that two sound-generating units, which are adjacent and share at least one acoustic cavity among a plurality of acoustic cavities, among a plurality of sound-generating units vibrate in opposite directions in at least a portion of the low-frequency band, in conjunction with the design of the sound outlet hole as shown in some embodiments of the present disclosure, it is possible to increase the sound pressure level of the sound pressure level output from a loudspeaker (a stacked loudspeaker) with n sound-generating units by 20×log₁₀(n) times compared to the sound pressure level of a loudspeaker (a single-layer loudspeaker) with only one sound-generating unit; 2) since the thickness of the piezoelectric loudspeaker is thin, by arranging a plurality of piezoelectric sound-generating units at intervals along the first direction (the thickness direction), a larger low-frequency output can be obtained while satisfying the smaller dimension of the design of the loudspeaker; 3) by flexibly adjusting the count of sound-generating units along the first direction, it is possible to enable the loudspeaker to be applied to more usage scenarios, thus making it widely applicable and practical; 4) through the mass block set along the long-axis direction or the short-axis direction of the sound-generating unit, the quality and stiffness of the vibration diaphragm can be adjusted to regulate the deformation of the vibration diaphragm when it vibrates, so as to improve the sound pressure level of the loudspeaker's output; 5) through the limitation of the voltages applied to the first piezoelectric layer and the second piezoelectric layer, the loudspeaker can be made to be more compatible with the battery power supply capability and power consumption of commonly used consumer electronic products such as earphones and audio glasses, so that the practicality of the loudspeaker can be enhanced.

The basic concepts have been described above, and it is apparent to those skilled in the art that the foregoing detailed disclosure is intended as an example only and does not constitute a limitation of the present disclosure. While not expressly stated herein, various modifications, improvements, and amendments may be made to the present disclosure by those skilled in the art. Those types of modifications, improvements, and amendments are suggested in the present disclosure, so those types of modifications, improvements, and amendments remain within the spirit and scope of the exemplary embodiments of the present disclosure.

Also, the present disclosure uses specific words to describe embodiments of the present disclosure. such as "an embodiment", "one embodiment", and/or "some embodiments" means a feature, structure, or characteristic associated with at least one embodiment of the present disclosure. Accordingly, it should be emphadimensiond and noted that "an embodiment" or "one embodiment", or "an alternative embodiment" referred to two or more times in different locations in the present disclosure do not necessarily refer to the same embodiment. In addition, certain features, structures, or characteristics of one or more embodiments of the present disclosure may be suitably combined.

Similarly, it should be noted that in order to simplify the presentation of the present disclosure, and thereby aid in the understanding of one or more embodiments of the invention, the foregoing descriptions of embodiments of the present disclosure sometimes group multiple features together in a single embodiment, accompanying drawings, or a description thereof. However, this method of disclosure does not imply that more features are required for the objects of the present disclosure than are mentioned in the claims. Rather, claimed subject matter may lie in less than all features of a single foregoing disclosed embodiment.

Some embodiments use numbers to describe the number of components, and attributes, and it should be understood that such numbers used in the description of the embodiments are modified in some examples by the modifiers "about", "approximately", or "substantially". Unless otherwise noted, the terms "about," "approximately", or "substantially" indicate that a ±20% variation in numbers is allowed. Correspondingly, in some embodiments, the numerical parameters used in the present disclosure and claims are approximations, which can change depending on the desired characteristics of individual embodiments. In some embodiments, the numerical parameters should consider the specified number of valid digits and employ general place-keeping. While the numerical domains and parameters used to confirm the breadth of their ranges in some embodiments of the present disclosure are approximations, in specific embodiments, such values are set to be as precise as possible within the range of feasibility.

Finally, it should be understood that the embodiments in the present disclosure are used only to illustrate the principles of the embodiments herein. Other variations may also fall within the scope of the present disclosure. As such, alternative configurations of embodiments of the present disclosure may be viewed as consistent with the teachings of the present disclosure as an example, not as a limitation. Correspondingly, the embodiments of the present disclosure are not limited to the embodiments expressly presented and described herein.

## Claims

1. A loudspeaker, comprising:
a plurality of sound-generating units, wherein the plurality of sound-generating units are arranged at intervals along a first direction, and each of the plurality of sound-generating units vibrates along the first direction; and
a shell configured to accommodate and support the plurality of sound-generating units, wherein the shell is provided with a plurality of sound outlet holes, the shell and the plurality of sound-generating units form a plurality of acoustic cavities, and each of the plurality of acoustic cavities is acoustically coupled to at least one of the plurality of sound outlet holes on the shell,
each of the plurality of sound-generating units includes a vibration diaphragm and a driving structure provided on the vibration diaphragm.

2. The loudspeaker of claim 1, wherein the driving structure includes a piezoelectric driving structure, the shell includes a plurality of fixing rings, and each of the plurality of fixing rings fixes the vibration diaphragm of one of the plurality of sound-generating units.

3. The loudspeaker of claim 2, wherein the piezoelectric driving structure is connected to one of the plurality of fixing rings through an elastic structure, and the elastic structure is symmetrical with respect to a long axis or a short axis of the piezoelectric driving structure.

4. The loudspeaker of claim 2, wherein the vibration diaphragm is provided with a lead, and the piezoelectric driving structure is connected to the lead.

5. The loudspeaker of claim 1, wherein the driving structure includes a planar coil.

6. The loudspeaker of claim 5, further comprising one or more magnets arranged within the shell, wherein the one or more magnets are disposed on a side of the vibration diaphragm back away from the planar coil.

7. The loudspeaker of claim 5, further comprising magnets arranged within the shell, wherein the magnets are disposed on two sides of the vibration diaphragm along the first direction, respectively, and the planar coil is disposed between two magnets of the magnets.

8. The loudspeaker of claim 5, further comprising one or more magnets arranged within the shell, wherein the one or more magnets include a disconnect-type magnet, and the disconnect-type magnet at least partially overlaps with a projection region of the planar coil along the first direction.

9. The loudspeaker of claim 1, wherein the shell includes a plurality of fixing rings, each of the plurality of fixing rings fixes one of the plurality of sound-generating units, respectively, two sound outlet holes are opened on a peripheral side of each of the plurality of fixing rings, and the two sound outlet holes are coupled to acoustic cavities on opposite sides of one sound-generating unit, respectively.

10. The loudspeaker of claim 9, wherein the shell includes a front shell and a rear shell, the front shell and an adjacent sound-generating unit of the front shell form a first acoustic cavity, the rear shell and an adjacent sound-generating unit of the rear shell forms a second acoustic cavity, two adjacent sound-generating units form a third acoustic cavity, a thickness of the first acoustic cavity or the second acoustic cavity along the first direction is less than a thickness of the third acoustic cavity along the first direction.

11. The loudspeaker of claim 10, wherein a height of each of the first acoustic cavity and the second acoustic cavity along the first direction is greater than or equal to 150 um, a height of the third acoustic cavity along the first direction is greater than or equal to 300 um, a height of each of sound outlet holes corresponding to the first acoustic cavity and the second acoustic cavity along the first direction is greater than or equal to 50 um, and a height of a sound outlet hole corresponding to the third acoustic cavity along the first direction is greater than or equal to 100 um.

12. The loudspeaker of claim 9, wherein the shell includes a front shell and a rear shell, at least two electrodes are arranged on each of the plurality of fixing rings, the at least two electrodes on each of the plurality of fixing rings are connected to the front shell or the rear shell through corresponding conduction electrodes, respectively.

13. The loudspeaker of claim 2, wherein the piezoelectric driving structure includes a piezoelectric material, and a Young's modulus of the piezoelectric material is in a range of 30 GPa to 100 GPa.

14. The loudspeaker of claim 13, wherein the piezoelectric driving structure includes a sintered piezoelectric ceramic, and a neutral layer of the sound-generating unit is located within the piezoelectric driving structure.

15. The loudspeaker of claim 14, wherein the piezoelectric driving structure includes a first piezoelectric layer, a second piezoelectric layer, a first electrode layer, a second electrode layer, and a third electrode layer, and along the first direction, the first electrode layer, the first piezoelectric layer, the second electrode layer, the second piezoelectric layer, and the third electrode layer are arranged sequentially; and
a polarization direction of the first piezoelectric layer is the same as a polarization direction of the second piezoelectric layer, and a first voltage of the first electrode layer and a third voltage of the third electrode layer both are greater than or both are less than a second voltage of the second electrode layer.

16. The loudspeaker of claim 14, wherein the piezoelectric driving structure includes a first piezoelectric layer, a second piezoelectric layer, a first electrode layer, a second electrode layer, and a third electrode layer, and along the first direction, the first electrode layer, the first piezoelectric layer, the second electrode layer, the second piezoelectric layer, and the third electrode layer are arranged sequentially; and
a polarization direction of the first piezoelectric layer is opposite to a polarization direction of the second piezoelectric layer, and a first voltage of the first electrode layer, a second voltage of the second electrode layer, and a third voltage of the third electrode layer decrease sequentially or increase sequentially.

17. The loudspeaker of claim 13, wherein the piezoelectric driving structure includes a MEMS piezoelectric ceramic, and a neutral layer of the sound-generating unit is located outside the piezoelectric driving structure.

18. The loudspeaker of claim 17, wherein the piezoelectric driving structure includes a first piezoelectric layer, a second piezoelectric layer, a first electrode layer, a second electrode layer, and a third electrode layer, and along the first direction, the first electrode layer, the first piezoelectric layer, the second electrode layer, the second piezoelectric layer, and the third electrode layer are arranged sequentially; and
a polarization direction of the first piezoelectric layer is opposite to a polarization direction of the second piezoelectric layer, and a first voltage of the first electrode layer and a third voltage of the third electrode layer both are greater than or both are less than a second voltage of the second electrode layer.

19. The loudspeaker of claim 17, wherein the piezoelectric driving structure includes a first piezoelectric layer, a second piezoelectric layer, a first electrode layer, a second electrode layer, and a third electrode layer, and along the first direction, the first electrode layer, the first piezoelectric layer, the second electrode layer, the second piezoelectric layer, and the third electrode layer are arranged sequentially; and
a polarization direction of the first piezoelectric layer is the same as a polarization direction of the second piezoelectric layer, and a first voltage of the first electrode layer, a second voltage of the second electrode layer, and a third voltage of the third electrode layer decrease sequentially or increase sequentially.

20. The loudspeaker of any one of claims 15, 16, 18, 19, wherein a first driving voltage of the first piezoelectric layer is a difference between the first voltage and the second voltage, a second driving voltage of the second piezoelectric layer is a difference between the second voltage and the third voltage, and an absolute value of the first driving voltage and an absolute value of the second driving voltage are both not higher than 5 V.

21. The loudspeaker of claim 14, wherein the vibration diaphragm includes a piezoelectric covering region with a piezoelectric non-covering region, and a ratio of a first area of the piezoelectric covering region to an overhanging area of the sound-generating unit is greater than or equal to 0.4.

22. The loudspeaker of claim 17, wherein the vibration diaphragm includes a piezoelectric covering region and a piezoelectric non-covering region, and a ratio of a second area of the piezoelectric non-covering region to an overhanging area of the sound-generating unit is less than 0.65.

23. The loudspeaker of claim 1, wherein the vibration diaphragm or the driving structure has a long-axis direction and a short-axis direction, and each of the plurality of sound-generating units further includes a mass block arranged along the long-axis direction or the short-axis direction, a dimension of the mass block along the long-axis direction or along the short-axis direction is smaller than a dimension of the piezoelectric driving structure.

24. An acoustic output device, comprising a low-frequency unit and a high-frequency unit, wherein the low-frequency unit includes the loudspeaker of any one of claims 1 to 22, and
an intersection point of frequency response curves of the low-frequency unit and the high-frequency unit is in a range of 300 Hz to 1000 Hz.

25. The acoustic output device of claim 24, wherein the high-frequency unit includes at least one of an air-conducting loudspeaker or a bone-conducting loudspeaker.

26. The acoustic output device of claim 24, wherein the high-frequency unit operates at least within a frequency range having the intersection point as a lower boundary.

27. The acoustic output device of claim 24, wherein the acoustic output device has a height direction parallel to the first direction and a thickness direction perpendicular to the first direction,
the low-frequency unit and the high-frequency unit are arranged in parallel along the height direction, and the low-frequency unit is arranged below the high-frequency unit; or
the low-frequency unit and the high-frequency unit are arranged in parallel along the thickness direction, and the high-frequency unit is arranged on a side of the acoustic output device closer to a user.

28. The acoustic output device of claim 27, wherein the high-frequency unit is acoustically coupled to a first hole portion arranged on the acoustic output device, the low-frequency unit is acoustically coupled to a second hole portion arranged on the acoustic output device, and the first hole portion and the second hole portion are both arranged toward the user, and
the first hole portion and the second hole portion are same hole or different holes.

29. The acoustic output device of any one of claims 24 to 28, wherein the acoustic output device includes at least one of a rear-hook earphone, an ear-hook earphone, an in-ear earphone, or eyeglasses.
